# EUROPÄISCHE PATENTSCHRIFT

(11) **EP 3 926 974 B1**
(45) Veröffentlichungstag und Bekanntmachung des Hinweises auf die Patenterteilung: **30.07.2025**
(21) Anmeldenummer: 21190399.2
(22) Anmeldetag: 18.03.2019
(51) Int. Cl.: H04Q 9/00, H01M 10/42, G08C 19/02, H02J 7/00, G08C 13/00, G08C 15/06

(54) **VERTEILTES MESSSYSTEM, MESSSTEUERUNG UND VERFAHREN ZUR MESSDATENÜBERTRAGUNG, INSBESONDERE ZUR ÜBERWACHUNG EINES AKKUMULATOR-ARRAYS**
DISTRIBUTED MEASUREMENT SYSTEM, MEASUREMENT CONTROL AND METHOD FOR TRANSMITTING MEASUREMENTS, IN PARTICULAR FOR MONITORING A BATTERY ARRAY
SYSTÈME DISTRIBUÉ DE MESURE, COMMANDE DE MESURE ET PROCÉDÉ DE TRANSFERT DE DONNÉES DE MESURE, EN PARTICULIER DE SURVEILLANCE D'UN GROUPE D'ACCUMULATEURS

(30) Priorität: 16.03.2018 DE 102018204060
(43) Veröffentlichungstag der Anmeldung: 22.12.2021
(62) Teilanmeldung aus: 19163521.8
(73) Patentinhaber: RP-Technik GmbH, 63110 Rodgau (DE)
(72) Erfinder: Pasedag, Roland, 63110 Rodgau (DE); Dr. phil. nat. Eichler, Martin, 61350 Bad Homburg (DE)
(74) Vertreter: Cremer & Cremer

(56) Entgegenhaltungen:
- EP-A1- 2 945 244
- DE-A1- 102012 202 754
- DE-A1- 102012 224 060
- US-A1- 2015 280 463
- US-A1- 2016 359 329

## Beschreibung

Die vorliegende Erfindung beschäftigt sich mit einem verteilten Messsystem, das dazu verwendet werden kann, mittels kabelgebundenem Datenbus zwischen Messsensoren und einem Messdatensammler mehrere Akkumulatorenpakete zentral zu überwachen. Mit anderen Worten, die vorliegende Erfindung beschäftigt sich mit einem Messsystem nach dem Oberbegriff des Anspruchs 1.

Die vorliegende Erfindung beschäftigt sich auch mit einer Messsteuerung, die als Steuerung bei einem verteilten elektronischen Messsystem durchgeführt werden kann. Mit anderen Worten, die vorliegende Erfindung beschäftigt sich mit einer Messsteuerung nach dem Oberbegriff des Anspruchs 11.

Auch beschäftigt sich die vorliegende Erfindung mit einem Verfahren zur Messdatenübertragung, das auf einem verteilten elektronischen Messsystem ausführbar ist. Gemessene Parameter von mehreren Akkumulatoren bzw. elektrochemischen Wandlern werden über mehrere Kommunikationskanäle von einem Messsensor an einen Messdatensammler übertragen. Es kann auch gesagt werden, die vorliegende Erfindung beschäftigt sich mit einem Verfahren zur Messdatenübertragung nach dem Oberbegriff des Anspruchs 15.

### Technisches Gebiet

Systeme, die mit besonders robusten und zugleich kostengünstigen Akkumulatoren aufgebaut werden sollen, die idealerweise nach Bedarf, z. B. zum Lebensende jedes einzelnen Akkumulators hin, u. a. aufgrund der Anordnung, der Betriebsweise, der räumlichen Platzierung und der mechanischen Befestigung individuell ausgetauscht werden können, umfassen mitunter Arrays, d. h. Anordnungen von seriell verschalteten und von parallel verschalteten Akkumulatoren, die mit Akkumulatoren des Typs "Blei-Akkumulator" (wie Blei-Akkumulator mit freier Schwefelsäure, VRLA-Akkumulator, Blei-Gel-Akkumulator und Blei-Glasfaser-Akkumulator) oder des Typs "Metallhydrid-Akkumulator" erstellt sind.

Akkumulatoren können mehrere elektrochemische Zellen umfassen.

Akkumulatoren-Arrays werden für zahlreiche Anwendungsfälle aufgebaut, unter anderem als Notstromenergieanlage einer Notlichtbeleuchtungsanlage. Ein weiteres Anwendungsgebiet für ein entsprechendes Akkumulator-Array ist das Gebiet der unterbrechungsfreien Stromversorgung(en), insbesondere in öffentlichen Gebäuden und in Industriebauten. Auch ist bekannt, Akkumulatoren-Arrays als Pufferbatterien in Energieversorgungssystemen mit Photovoltaikkomponenten einzusetzen.

Obwohl die Anordnung, die als Akkumulator-Array bezeichnet wird, als eine zu Strängen zusammengeschlossene, in Serie verschaltete Anordnung von Akkumulatorenpaketen aus Akkumulatoren eines robusten Akkumulatorentyps wie aus Bleiakkumulatoren aufgebaut wird, bei der insbesondere mehrere Stränge parallel angeordnet sind, muss eine Zentralbatterieanlage als Teil einer Notlichtbeleuchtungsanlage sowie eine Anlage zur unterbrechungsfreien Stromversorgung, damit sie den normativen Anforderungen wie der VDE 0833 entsprechen, mit Mess- und Überwachungselektroniken ausgestattet werden, die Auskunft über die Betriebsfähigkeit, vorzugsweise auch Auskunft über den Zustand der einzelnen Akkumulatorenpakete, geben können.

Entsprechende, in vielen Einsatzgebieten zwischenzeitlich erfolgreich getestete und angewendete Überwachungssysteme sind in der EP 2 770 605 B1 (Patentinhaberin: RP-Technik GmbH; Erteilungstag: 01.02.2017) und EP 2 911 269 B1 (Patentinhaberin: RP-Technik GmbH; Erteilungstag: 05.07.2017) beschrieben.

In der Beschreibung dieser beiden Druckschriften sind zahlreiche Informationen und Details zu Akkumulator-Arrays und geeigneten Überwachungssystemen enthalten, wobei die dortigen Systembeschreibungen durch ihre Benennung als Systembeschreibung für vorliegende Erfindung gelten. Statt die Beschreibung einschlägiger Systeme von Akkumulatoren-Arrays mit Überwachungs- und Steuerelektronik erneut zu präsentieren, sei auf die Systembeschreibungen der EP 2 770 605 B1 und der EP 2 911 269 B1 aus Gründen der kompakteren Darstellung verwiesen.

### Stand der Technik

In einigen, bekannten Kommunikationssystemen, bei denen die Übertragung über die einzelnen Kommunikationskanäle nicht immer sichergestellt werden kann, werden Verfahren eingesetzt, die die Datenübertragung sicherer gestalten sollen.

In diesem Zusammenhang darf die US 6 272 190 B1 (Patentinhaberin: NTP Incorporated; Erteilungstag: 07.08.2001) genannt werden. Die US 6 272 190 B1 beschäftigt sich mit Datenübertragungen in Mobilfunknetzen, die störanfällig sein sollen. Als Lösung schlägt die US 6 272 190 B1 vor, dass ein erster paralleler Informationsdatenstrom und ein zweiter paralleler Informationsdatenstrom an eine delozierte, zentrale Empfangseinheit übertragen werden, wobei die Empfangseinheit aufgrund von Fehlerkorrekturinformationen zurückschließen kann, ob der erste Informationsdatenstrom oder der zweite Informationsdatenstrom wegen Fehlerhaftigkeit zu verwerfen ist. Die beiden identischen Informationsdatenströme unterscheiden sich durch die Trägerfrequenz, über die der erste oder der zweite Informationsdatenstrom an den Empfänger übertragen wird.

In den drei Patentanmeldungen DE 10 2012 218 333 A1 (Anmelderinnen: Robert Bosch GmbH und Samsung SDI Co. Ltd.; Offenlegungstag: 10. April 2014), DE 10 2012 211 125 A1 (Anmelderinnen: Robert Bosch GmbH und Samsung SDI Co. Ltd.; Offenlegungstag: 02. Januar 2014) und DE 10 2012 218 330 A1 (Anmelderinnen: Robert Bosch GmbH und Samsung SDI Co. Ltd.; Offenlegungstag: 10. April 2014) werden Batteriemessverfahren behandelt, bei denen mit wenigstens zwei oder sogar mehr als zwei unterschiedlichen Messdatensätzen operiert wird, um eine für die Übertragung der Messdaten benötigte Bandbreite auf einem Übertragungskanal zu reduzieren. Die Zuverlässigkeit der Datenübertragung wird daran festgemacht, ob die benötigte Bandbreite und die von dem Kommunikationskanal, z. B. einem CAN-Bus, zur Verfügung gestellte Bandbreite zueinander passen. Zum einen halten die Druckschriften fest, dass, wird nur eine geringe Messdatenauflösung benötigt, die Messfrequenz flexibel erhöht werden kann. Zum anderen sei es so, dass, wird die genutzte Bandbreite reduziert, der Datenbus zu einem geringeren Anteil genutzt und dadurch weniger störanfällig sei. Mit anderen Worten, die Verfasser der Druckschriften suchen ihr Heil darin, die Datenauflösung zu reduzieren, weil die Bandbreite nicht ausreichend dimensioniert ist. In diesem Zusammenhang sollen dann unterschiedliche Datensätze für Datenpakete zur Spannung und zur Temperatur eines Akkumulators übertragen werden.

Außerdem wird in der EP 2 945 244 A1 (Anmelderin: Airbus Operations GmbH; Veröffentlichungstag: 18.11.2015) ein Modul zur Verteilung von Energie und Daten (PADD) in einem Luft- bzw. Raumfahrzeug beschrieben. Ein Verteilnetzwerk soll mehrere Interfaces zur Energieversorgung und mehrere Interfaces zur Datenübertragung aufweisen. Es ist vorgesehen, dass eine oder mehrere elektrische Lasten an das Netzwerk angeschlossen und mit Gleichspannung oder Wechselspannung versorgt werden. Hierfür soll das Netzwerk mehrere sog. PADD-Module aufweisen, die mit einem elektrischen Energiespeicher ausgestattet sein können.

Gemäß der US 2015/ 280 463 A1 (Anmelder: Y. Okuda et al.; Veröffentlichungstag: 01.10.2015) wird vorgeschlagen, ein System seriell verschalteter, wiederaufladbarer Batterien, das einen von der Systemgröße abhängigen Energiebedarf zur Kommunikation von Systemparametern bzw. von Daten aufweist, effizienter zu gestaltet. Hierfür sollen segmentierte Datenpakete mit vorgegebener Länge, wobei jedes Segment für Daten aus einem bestimmten Batteriepack reserviert ist, entlang eines entsprechenden seriellen Kommunikationspfads geschickt werden. Für die Energieversorgung und für die Kommunikation sollen unterschiedliche Pfade dienen. Batterieparameter sollen jeweils in Reaktion auf einen von einer Batteriemanagementeinheit ausgegebenen Abfragebefehl, z. B. über einen faseroptischen Kommunikationspfad an ein adressiertes Batteriepack gerichtet, bereitgestellt werden. Nicht adressierte Batteriepacks sollen das Datenpaket unverändert auf dem Kommunikationspfad weiterleiten.

Die Patentanmeldung DE 102012 202 754 A1 (Anmelderin: Robert Bosch GmbH; Offenlegungstag: 29.08.2013) beschäftigt sich mit einer Batteriesensordatenübertragungseinheit und einem dazugehörigen Verfahren zum Übertragen von Batteriesensordaten. Eine Verschaltungszustandsermittlungseinheit soll den Serienschaltungszustand von den vorhandenen Batteriezellen ermitteln können, die mittels einer Energieübertragungsleitung in Reihe geschaltet sind bzw. die ggf. überbrückt oder entkoppelt sind. Eine Datenübermittlungseinheit soll ein Sensorsignal, das zur Batteriezelle eine physikalische Größe repräsentiert, unter Verwendung der Energieübertragungsleitung in dem Serienschaltungszustand an ein Auswertungsgerät ausgeben können. Eine einfache Auswertung bzw. ein einfacherer Empfang der Sensorsignale soll dadurch ermöglicht werden, dass das Auswertungsgerät zu vorbestimmten Zeitpunkten das Sensorsignal von einer bestimmten Batteriezelle lediglich über einen einzigen Übertragungspfad, ggf. in häufiger Wiederholung, zu erwarten braucht.

Die DE 10 2012 224 060 A1 (Anmelderin: Robert Bosch GmbH; Offenlegungstag: 26.06.2014) beschreibt ein Verfahren zur Datenübertragung für ein Batteriemanagementsystem und ein entsprechendes Batteriemanagementsystem zum Betrieb eines Batteriepacks. In dem Verfahren sollen Messdaten, die von Sensorsteuergeräten über einen Datenbus zu einem Hauptsteuergerät eines Batteriemanagementsystems für Fahrzeuge übertragen werden, komprimiert werden. Zu den Verfahrensschritten gehören die Übertragung einer Änderungsrate/Steigung zu Beginn der Messungen, die Übertragung von Abweichungen/Differenzen der Messdaten von einer aktuellen Steigung und eine Rekonstruktion von Messwerten, die informationsverlustfrei sein soll. Die Rekonstruktion soll durch das Hauptsteuergerät aus den empfangenen Abweichungen erfolgen. Zusätzlich ist vorgesehen, die Messdaten im Hauptsteuergerät einer Extrapolationsoperation zu unterziehen und mitunter sollen Korrekturen an den Messwerten vorgenommen werden können.

In der US 2016/ 359 329 A1 (Anmelderin: Samsung SDI Co. Ltd.; Veröffentlichungstag: 08.12.2016) wird ein System zur Überwachung mehrerer Batteriepacks und ein zugehöriges Verfahren zur Überwachung beschrieben. Das System umfasst ein sog. "master battery pack", das direkt mit einer Steuereinheit kommunizieren soll, und sog. "slave battery packs", die nicht mit jener Steuereinheit sondern mit dem "master battery pack" kommunizieren sollen. Das "master battery pack" leitet die Zustandsinformationen der "slave battery packs" an die Steuereinheit weiter und kann den "slave battery packs" über das "master battery pack" Steuerbefehle zukommen lassen. Nach dem Einschalten sollen die "battery packs" sog. "Identifier" miteinander austauschen. Zu jedem "battery pack" soll ein "battery management system (BMS)" gehören, das anhand von einer Priorisierung der in einem Zeitfenster nach dem Einschalten miteinander ausgetauschten "Identifier" selbsttätig feststellen soll, ob sein zugeordnetes "battery pack" ein "master" oder ein "slave" ist. Informationen über z. B. Ausgangsspannungen sollen dem BMS von einem Unterbrecherschaltkreis zur Verfügung gestellt werden können. Zu den Zustandsinformationen können auch Informationen über Ladezustand, Strom und Temperatur des jeweiligen Packs gehören. Der Unterbrecherschaltkreis soll von dem BMS ansteuerbar sein. Außerdem soll das BMS die empfangenen Zustandsinformationen des "battery pack" weiterleiten können. Für die Kommunikation sollen die "battery packs" über ein "controller area network (CAN)" miteinander verkabelt sein. Nicht beschrieben ist, wie das System reagieren soll, wenn das "master battery pack", z. B. aufgrund von einer Störung, in dem gesetzten Zeitfenster nicht identifiziert wird.

### Aufgabenstellung

Obwohl die oben bezeichneten beiden Druckschriften des Europäischen Patentamts (EP 2 770605 B1 und EP 2 911 269 B1) sehr ausgereifte Systeme beschreiben, hat es sich gezeigt, dass es tatsächlich, insbesondere im Anwendungsgebiet der unterbrechungsfreien Stromversorgung, Übertragungsmomente bzw. Phasen der Übertragung gibt, zu denen die Datenübertragung gestört ist. Auf Basis der bisher entwickelten, in den beiden Druckschriften beschriebenen, verteilten Messsysteme für Akkumulatoren bzw. Akkumulatoren-Arrays mit zentral angeordneten Überwachungsgeräten ist eine Weiterentwicklung gewünscht, die eine Datenübertragung noch zuverlässiger sicherstellt.

### Erfindungsbeschreibung

Das erfindungsgemäße verteilte Messsystem geht aus Patentanspruch 1 hervor. Vorteilhafte Weiterbildungen sind den Ansprüchen 2 bis 10 zu entnehmen.

Eine erfindungsgemäße Messsteuerung zur Übertragung von wenigstens zwei Sensorwerten erfolgt durch eine Messsteuerung nach Patentanspruch 11. Vorteilhafte Weiterbildungen sind den Ansprüchen 12 bis 14 zu entnehmen.

Ein geeignetes Verfahren zur Messdatenübertragung, das auf einem verteilten elektronischen Messsystem ausführbar ist, ist Anspruch 15 zu entnehmen.

Das Messsystem ist dafür vorgesehen, Parameter von mehreren Akkumulatoren dadurch messtechnisch zu erfassen, dass mehreren Akkumulatoren jeweils ein eigener Messsensor zugeordnet ist. Die Akkumulatoren sind parallel oder in Serie oder in Mischform paralleler und serieller Anordnungen aus einigen parallelen und einigen seriell verschalteten Akkumulatoren zusammengeschlossen.

Mehrere Messpunkte können durch einen Polygonzug erfasst werden. Die Messpunkte werden nicht als reine Messpunktetabelle über Kommunikationskanäle an einen Messdatensammler übertragen, sondern in einer umgewandelten Form, insbesondere in einer durch Polygonzüge dargestellten Form.

Ein Messdatensammler, der, gegebenenfalls mit weiteren Baugruppen, eine zentrale Steuereinheit des Energieversorgungssystems darstellt, bezieht von den Energieversorgungsleitungen Informationen über den Zustand der durch Messsensoren überwachten Akkumulatoren. Das Steuergerät, zu dem der Messdatensammler gehört, ist dafür vorgesehen, eine Wechselspannung zu erzeugen.

Ein Messdatensammler, für den die Daten der Messsensoren bzw. der Messaufnehmer bestimmt sind, ist entfernt von jedem einzelnen der Messsensoren bzw. Messaufnehmer vorhanden. Der Messdatensammler kann Messdaten (in aufbereiteter Form) von den Energieversorgungsleitungen des Energieversorgungssystems ableiten.

Neben der Kommunikation über Energieversorgungsleitungen bietet das verteilte Messsystem einen kabelgebundenen Kommunikationsbus.

Ein Datenbus, der sich für den weiteren kabelgebundenen Kommunikationskanal anbietet, entspricht einem CAN-Bus-System. Hierbei sei hervorgehoben, dass mit der Bezeichnung CAN-Bus unterschiedliche Bus-Systeme bezeichnet werden können.

Die Übertragung an den Messdatensammler erfolgt aber nicht nur durch einen einzigen Typ von Messdatensatz, sondern durch zwei unterschiedliche Typen Messdatensätze. Die beiden Typen Messdatensätze beinhalten zumindest zum Teil die gleiche Information anders aufbereitet. Sowohl aus dem ersten Typ Messdatensatz können die gemessenen Parameter (ggf. mit einem gewissen Fehler) abgeleitet werden. Aber auch aus dem zweiten Messdatensatz können die gemessenen Parameter (ggf. mit einem gewissen Fehler) abgeleitet werden (zweite Approximation im Ablauf der Messsteuerung). Der Kommunikationskanal wird von einem Messaufnehmer derart genutzt, dass zu einem ersten Zeitpunkt ein Messdatensatz eines ersten Typs übertragen wird. Zu einem zweiten Zeitpunkt, der weniger lange zurückliegt als der erste Zeitpunkt (in Bezug auf den aktuellen Betriebszeitpunkt), wird ein zweiter Typ Messdatensatz übertragen (z. B. als ein "Typ 1"-Log und als ein "Typ 2"-Log). Werden die Messdatensätze aus dem Kommunikationskanal analysiert, z. B. durch ein Oszilloskop oder durch einen Logikanalysator, so ergeben sich zumindest zwei Messdatensätze mit mehreren Messwörtern, durch die mehrere Parameterwerte übertragbar sind.

Die über die Messdatensätze übertragenen Messwerte geben Messpunkte wieder, die über eine Sekantenbeziehung, d. h. durch Sekanten von Messpunkt zu Messpunkt, untereinander verknüpft sind. Aus einem ersten Messpunkt kann über die Sekantenbeziehung, die sich in Richtung auf einen zweiten Messpunkt ausbildet, der (eigentliche) zweite Messpunkt abgeleitet werden. Diese Sekantenbeziehung spiegelt einen zeitlichen Abstand zwischen einem ersten Messpunkt und einem zweiten Messpunkt wieder. Zwischen den Messdatensätzen, d. h. einem Messdatensatz des ersten Typs und einem Messdatensatz des zweiten Typs, weichen die zeitlichen Längen bzw. Dauern (auch als "Sekantenperioden" zu bezeichnen) zueinander ab.

Unter einem anderen Blickwinkel kann die Erfindung wie folgt erläutert werden.

Mittels Messsteuerung können gemessene Daten über wenigstens einen Kommunikationskanal an eine zentralisiert angeordnete Einheit, dem Messdatensammler übertragen werden. Hierzu hat jeder der in das Messsystem eingebundenen Messaufnehmer, die auch als Messsensoren bezeichnet werden können, eine autark laufende Steuerung zur Übertragung der Messdaten des einzelnen Messaufnehmers. Das Verfahren zur Messdatenübertragung ist dafür bestimmt, auf einem verteilten, elektronischen Messsystem zu laufen. Die einzelnen Messaufnehmer sind elektrochemischen Wandlern, vorzugsweise mehrere elektrochemische Zellen umfassende Akkumulatoren, wie jeweils einem, insbesondere mehrere Zellen umfassenden, Bleiakkumulator oder wie jeweils einem, insbesondere mehrere Zellen umfassenden, Nickel-Metallhydrid-Akkumulator, zugewiesen, idealerweise unmittelbar auf einem oder in einem einem Messaufnehmer zugeordneten Akkumulator angeordnet. Somit ist ein Messaufnehmer einem bestimmten Akkumulator zugeordnet und für dessen Messwerte verantwortlich.

Entfernt von dem einzelnen Messaufnehmer, d. h. von allen Messaufnehmern, die in einer Ausgestaltung auch als Messsensoren bezeichnet werden können, ist der Messdatensammler angeordnet.

Zwischen den einzelnen Messaufnehmern und dem Messdatensammler ist wenigstens ein Kommunikationskanal vorhanden, über den die Messaufnehmer gemessene Daten, idealerweise aufbereitet, d. h. berechnet, übertragen können. Hierbei kann es vorkommen, dass der Kommunikationskanal zumindest zeitweise störbelastet ist, z. B. durch EMV-Störungen, die von solchen Geräten wie Invertern, Zerhackern, Wechselstromgeneratoren oder Wechselstromrichtern erzeugt werden.

Ein Teil der Messsteuerung, nämlich jener, der in einem Messaufnehmer abgearbeitet wird, sorgt für eine Messung von Parametern, durch die das zu überwachende Objekt, wie der Bleiakkumulator, zumindest teilweise, charakterisierbar ist, wie z. B. anhand eines Polspannungswerts, anhand einer Temperaturentwicklung, anhand eines Restladezustands oder anhand eines Strom-Spannungs-Verhältnisses.

Obwohl zwei unterschiedliche Messdatensätze übertragen werden, die vorzugsweise nur zum Teil, also teilweise redundante Informationen beinhalten, tritt keine Verdoppelung des Übertragungsaufwandes auf, sondern aufgrund der unterschiedlichen Messdatenstruktur mit teilweise identischen, rückrechenbaren Informationen gewinnt der Messdatensammler durch jeden Messdatensatz zusätzliche Informationen, um die in ihm zu speichernden Kurvenformen einzelner Parameterverläufe in Abhängigkeit von der Zeit, sozusagen nach und nach, mit geringeren Fehlern bzw. Abweichungen zu speichern (dritte Approximation im Ablauf der Messsteuerung).

Unter einem weiteren Blickwinkel kann die Erfindung wie folgt erläutert werden.

Das Verfahren zur Übertragung von gemessenen Daten ist u. a. deswegen besonders geeignet, weil mehrere Werte von insbesondere wenigstens zwei verschiedenen Sensoren zu übertragen sind. Die Parameter, die ein Objekt, wie z. B. einen Bleiakkumulator oder einen Nickel-Metallhydrid-Akkumulator, elektrotechnisch bzw. energietechnisch beschreiben, sind auf verschiedene physikalische Phänomene zurückzuführen. Die unterschiedlichen physikalischen Phänomene, wie eine Temperatur und/oder eine Spannung, werden gemessen, um einen Zustand eines einem Messaufnehmer zugeordneten Akkumulators beurteilen zu können. Hierfür wird zu unterschiedlichen Zeitpunkten, sei es zu einem ersten Zeitpunkt, zu einem zweiten Zeitpunkt, zu einem dritten Zeitpunkt usw., eine Messung der physikalischen Parameter durchgeführt, damit für den gleichen Zeitpunkt des Betriebs die gleichen Parameter übertragen werden können.

Über den gleichen Kommunikationskanal, der z. B. durch ein Energieversorgungskabel mit mehreren Adern zur Verfügung gestellt wird, kann ein zweiter Messaufnehmer zu anderen Zeitpunkten Parameter, die zu einem weiteren Akkumulator vorhanden sind, übertragen. Jeweils eigenständig und somit untereinander (zumindest indirekt) unkoordiniert übertragen die Messaufnehmer die von ihnen aufgenommenen Parameter, insbesondere in einer mathematisch umgewandelten Form, an einen Messdatensammler. Der Messdatensammler befindet sich an einem anderen Ort in der Energieversorgungsanlage, zu der auch die zu überwachenden Akkumulatoren gehören. Eine solche Energieversorgungsanlage kann eine Notlichtbeleuchtungsanlage oder eine Energiequelle für eine unterbrechungsfreie Stromversorgung sein. Eine geeignete Stelle zur Anordnung eines Messdatensammlers kann z. B. ein zentraler Steuerrechner einer Notlichtbeleuchtungsanlage sein. Im Falle der Nutzung der Messsteuerung bzw. des Einsatzes der Messsteuerung in einer unterbrechungsfreien Stromversorgung kann ein geeigneter Ort des Messdatensammlers die Steuereinheit der gesamten unterbrechungsfreien Stromversorgung sein.

Die Messwerte zu einzelnen Parametern ergeben eine Messkurve, die durch Polygonzüge (ggf. mit einem gewissen Fehler) vereinfacht dargestellt werden können. Die Polygonzüge können sich aus Sekanten zusammensetzen, die den Polygonzug und damit die tatsächliche Parameterkurve approximieren. Zu unterschiedlichen Zeitpunkten werden unterschiedliche Polygonzüge von einem Messaufnehmer zu dem Messdatensammler übertragen. Somit überträgt ein Messaufnehmer zu zwei verschiedenen Zeitpunkten zwei verschiedene Polygonzüge. Jeder Polygonzug beinhaltet eine gewisse Datenmenge, die einen Teil der gemessenen Parameterkurve in approximierter Form wiedergibt.

Jeder Messaufnehmer folgt bzw. setzt wenigstens zwei voneinander abweichende Approximationsverfahren um. Der eine Messaufnehmer misst zwar einen Parameter, gegebenenfalls mehrfach hintereinander, um eine Rechengröße zu erhalten; er berechnet aber durch zwei voneinander abweichende Approximationsverfahren einen sich letztendlich ergebenden Polygonzug zu ein und dergleichen Parameterkurve. Diese beiden Polygonzüge, die unterschiedliche Zeitperioden darstellen, werden, insbesondere wechselweise, über den Kommunikationskanal übertragen, damit der Messdatensammler die Polygonzüge aufnehmen kann und daraus die (am ehesten tatsächlich existente) Parameterkurve ableiten kann.

Dadurch, dass dem Messdatensammler Parameter von zu überwachenden Objekten mit Teilredundanzen übertragen werden, ist dieser in der Lage, durch kontinuierlich durchführbare Approximationen die tatsächliche Annäherung an die Parameterkurve ab- bzw. herzuleiten. Je länger die Messdatenaufzeichnung erfolgt, desto wahrscheinlicher ist es, obwohl der Kommunikationskanal störungsbehaftet sein kann, dass der Messdatensammler sich nach und nach der tatsächlichen Parameterkurve jedes einzelnen Parameters, der gemessen wird, annähert.

Ein Vorteil des verteilten Messsystems tritt besonders dann zum Vorschein, wenn wenigstens zwei, idealerweise noch mehr als zwei Akkumulatoren zusammen ein durch sie dargestelltes Energie-(Not-)Versorgungssystem bilden.

Solche, insbesondere auf Akkumulatoren basierende, Energieversorgungssysteme werden gerne als Teil einer unterbrechungsfreien Stromversorgung, in einer alternativen Verwendung auch als Teil einer Notstromversorgung, z. B. für eine Notlichtbeleuchtungsanlage, verwendet. Im regulären Netzbetrieb können die Akkumulatoren mit einer (geringen) Erhaltungsladung auf einer maximalen Aufladung gehalten werden. Bricht die Phasenversorgung zumindest bei einer von ggf. mehreren Netzphasen ein oder sogar zusammen, so kann ohne jegliche Verzögerung Energie aus dem Akkumulator ersatzweise in einem (elektrischen) Installationsbereich, der von dem Energieversorgungssystem versorgt werden kann, zur Verfügung gestellt werden.

Akkumulatoren sind besonders gut zu charakterisieren, wenn nicht nur ein einziger Parameter pro vorhandenem Akkumulator eines Energieversorgungssystems gemessen wird, sondern zumindest einige ausgewählte Akkumulatoren eines Energieversorgungssystems durch wenigstens zwei, physikalisch voneinander abweichende Parameter überwacht werden. Solche Parameter können z. B. eine Leerlaufspannung oder eine Belastungsspannung des Akkumulators auf der einen Seite und ein Temperaturwert des Akkumulators, z. B. an einer Oberfläche des Akkumulators oder auch im Inneren zwischen einzelnen Zellen des Akkumulators, sein. Solche Parameter wie Spannung und Temperatur sind aussagekräftige Parameter, die Aussagen über den Zustand des Akkumulators geben können.

Über den kabelgebundenen Kommunikationsbus können weitere Daten, idealerweise die gleichen Daten wie über die Energieversorgungsleitung, übertragen werden, jedoch in einem ggf. anderen elektrischen Protokoll.

Die Messdaten, die von einem der Messsensoren aufgenommen werden, werden nicht nur über einen Kommunikationskanal, sondern über mehrere Kommunikationskanäle übertragen. Die Messdaten können z. B. approximierte Polygonzüge sein, durch die ein Kurvenverlauf eines zu messenden Parameters, z. B. in Abhängigkeit von der Zeit, dargestellt wird.

Die Messdatensätze, die jeweils in einem Messaufnehmer bzw. Messsensor ermittelt werden, spiegeln einen durch Sekanten zusammengesetzten Kurvenverlauf über mehrere Zeitabstände wider. Der Messdatensatz spiegelt also einen Polygonzug wider, der insbesondere eine noch einstellige Anzahl von einzelnen Sekanten bzw. Abschnitten, die durch Sekanten (den Sekantenabschnitten) gebildet sind, darstellt.

Hierbei ist es besonders vorteilhaft, wenn der Polygonzug auf eine Anzahl von Messpunkten anpassbar ist, die sich zwischen einem ersten Zeitpunkt und einem zweiten Zeitpunkt ereignen. Auch ist es vorteilhaft, wenn verschiedene Polygonzüge durch den Messaufnehmer angeboten werden, die unterschiedlich lange Zeitperioden widerspiegeln.

Neben einem ersten Messdatensatz ist es vorteilhaft, wenn ein zweiter Messdatensatz zu einem zweiten Polygonzug durch den Messaufnehmer bzw. Messsensor den Messdatensammlern dargeboten wird. Der zweite Polygonzug kann, insbesondere im Vergleich zum ersten Polygonzug, deutlich umfangreicher eine Parameterkurve wiedergeben, z. B. durch eine dreistellige Anzahl an Stützpunkten bzw. Messpunkten, zwischen denen einzelne Sekanten, die auch als Sekantenabschnitte umgangssprachlich bezeichnet werden können, liegen.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Vorteilhaft ist es, wenn nicht nur eine Art von Kommunikationskanal zur Verfügung steht, sondern neben einem ersten Kommunikationskanal, der z. B. leitungsgebunden ist, ein zweiter Kommunikationskanal vorhanden ist, der ebenfalls leitungsgebunden ist. Der zweite Kommunikationskanal kann z. B. unabhängig von Störungen auf dem Restkommunikationskanal, d. h. insbesondere abgekoppelt, vorhanden sein.

Neben einem ersten Kommunikationskanal und einem zweiten Kommunikationskanal kann natürlich auch ein weiterer Kommunikationskanal vorhanden sein. In einer günstigen Ausgestaltung wird als Medium oder Mittel zur Übertragung des ersten Kommunikationskanals die Energieversorgung genutzt. Genauer gesagt, die Energieversorgungsleitungen bilden die physische Grundlage für den Kommunikationskanal. Der zweite Kommunikationskanal kann eine dezidierte Datenverbindungsleitung sein.

Ein, insbesondere durch Versuche nachgewiesenes, zuverlässiges Übertragungsverfahren besteht darin, ein amplitudenmoduliertes Rechtecksignal auf einem der Kommunikationskanäle, insbesondere auf den Stromversorgungskanal, zur Verfügung zu stellen.

Die Zuverlässigkeit der Datenübertragung kann weiter gesteigert werden, wenn nicht nur mit einer einzelnen Trägerfrequenz operiert wird, sondern mehrere Trägerfrequenzen zur Verfügung stehen, die als Trägerfrequenz zur Übertragung, z. B. eines amplitudenmodulierten Rechtecksignals, genutzt werden können. In einer Ausgestaltung findet ein Frequenzstrom von einer Trägerfrequenz zur nächsten Trägerfrequenz statt, während Messdatensätze übertragen werden sollen. Hierbei kann der Trägerfrequenzwechsel zwischen Typen von Messdatensätzen erfolgen. Genauso kann eine Trägerfrequenzänderung auch bei der Übertragung eines Messdatensatzes eines bestimmten Typs erfolgen.

Als weiterer Kommunikationskanal bietet sich auch (zusätzlich) ein optischer Übertragungsweg an.

Zusätzlich können noch weitere Kommunikationskanäle vorhanden sein, z. B. optische, auf Lichtleitungen basierende und/oder auf elektromagnetischen Wellen basierende Kommunikationskanäle.

Vorteilhafterweise wächst ein Polygonzug, insbesondere der zweite Polygonzug, während der Dauer eines Betriebs der Messsteuerung an. Im Laufe eines längeren Betriebs verlängert sich auch der Polygonzug.

Der jeweilige Messaufnehmer ist nicht nur ein Messaufnehmer, sondern zugleich auch ein Datenaufbereiter. Der Messaufnehmer kann Sekantenberechnungen durchführen, durch die einzelne Sekantenwerte berechnet werden. Eine solche Herleitung von Sekantenwerten stellt die Basis für einen zu übertragenden Messdatensatz dar.

Idealerweise ist der Messdatensammler als Teil einer oder zusammen mit einer zentralen Steuereinheit, z. B. einer USV-Steuerung, aufgebaut. Zur Stromversorgung gehören Akkumulatoren, mehrere Elektroniken, d. h. Elektronikboards, und Anschlussmaterialien wie Kabel und Stecker.

Die vorliegende Erfindung ist anhand einer Messsteuerung und auch anhand eines entsprechenden Messsystems erläutert worden. Verständlicherweise ist es möglich, auf einem erfindungsgemäßen Messsystem auch eine erfindungsgemäße Messsteuerung abarbeiten zu lassen.

Die zuvor dargestellten Kombinationen und Ausführungsbeispiele lassen sich auch in zahlreichen weiteren Verbindungen und Kombinationen betrachten.

So ist es natürlich auch möglich, mehrparametrige Datenmengen zu übertragen, die mehr als zwei physikalische Parameter zu einem Akkumulator abdecken.

Ein Spannungswert und ein Temperaturwert können z. B. zusammengefasst werden, um einen Spannungswert-Polygonzug und einen Temperaturwert-Polygonzug, idealerweise auf die gleiche Zeitbasis bezogen, zu bilden.

Ein Messsystem, das in einer Anlage einer, insbesondere auf Batterien bzw. Akkumulatoren basierenden, Energieversorgung angeordnet ist, hat einzelne Komponenten in Nachbarschaft, unmittelbar auf oder sogar innerhalb von wesentlichen Komponenten des Energieversorgungssystems, z. B. zwischen Polen eines Akkumulators. Das Messsystem dient zur Überwachung der Akkumulatoren, insbesondere ihrer Zustände. Die Akkumulatoren sind mit Messaufnehmern oder Messsensoren ausgestattete Akkumulatoren. Solche Akkumulatoren können in ihrem Gehäuse jeweils einen Messsensor oder Messaufnehmer integriert haben. In einer weiteren Ausgestaltung ist den Polen der Akkumulatoren jeweils ein Abgriff zugeordnet, über den Messwerte bzw. Messparameter wie eine Akkumulatorspannung abgegriffen werden können.

Ein Messaufnehmer ist idealerweise zusammen mit einem Akkumulator eine kompakte, zu einem Gerät integrierte Baueinheit.

Zur Messung wird vorteilhafterweise ein Analog-Digital-Konverter verwendet, z. B. als Teil eines Mikrokontrollers, der somit diskrete, einzelne Messwerte zu ganz bestimmten Zeitpunkten ermittelt. Die Messung wird dadurch noch präziser, dass sich eine Messung (tatsächlich) aus mehreren Einzelmessungen, z. B. im Rahmen einer gewichteten Mittelwertbildung, zusammensetzt bzw. aus diesen abgeleitet wird. Jeder Messaufnehmer operiert, wie weiter oben angesprochen, selbständig. Hierfür kann der Messaufnehmer mit einer Taktung ausgestattet sein, die bestimmt, wie häufig und zu welchen Zeitpunkten, d. h. mit welcher Wiederholrate, die einzelnen, zeitlich diskreten Messungen durchgeführt werden.

Zu einem durch eine Wiederholrate bestimmten Zeitpunkt nimmt der Messaufnehmer wenigstens einen Parameter, idealerweise mehrere Parameter auf. Hierbei kann die Messung mehrfach, innerhalb weniger Millisekunden, repetiert werden, damit aus einer Schar von Messpunkten ein korrigierter Messwert approximiert wird (erste Approximation im Ablauf der Messsteuerung). Ältere Messungen, es kann auch gesagt werden, die vorhergegangen Messungen, zumindest ihre approximierten Werte, werden in dem Umfang, wie ein Speicher hierfür in dem Messaufnehmer vorgehalten ist, aufbewahrt bzw. gespeichert. Der Messaufnehmer hat - sozusagen - ein sich durch die Wiederholrate aktualisierendes Messbuch, das im Betrieb mit jüngeren Messungen permanent fortgeschrieben wird. Idealerweise ist die Wiederholrate, nach der jeweils eine einzelne Messung durchgeführt wird, veränderlich. Hierbei werden die Messwerte - ein einzelner Messwert kann auch als Messpunkt bezeichnet werden - aufbereitet, berechnet und umgewandelt, um zu der Bildung eines Sekantenwertes beizutragen. Eine jüngste Messung wird mit einer früheren Messung rechnerisch über eine Sekantenbildung verbunden, damit der rechnerisch ermittelte Sekantenwert an den Messdatensammler übertragen werden kann.

Die Spannungswerte eines Akkumulators werden an dem Akkumulator abgegriffen. Die Spannungswerte werden durch den Messsensor gemessen. Dadurch werden einzelne Zellen des zu einem Akkumulator zusammengefassten Akkumulators gemessen. Der Akkumulator wird durch in Serie verschaltete Zellen gebildet.

Zellen eines Akkumulators können so unmittelbar gemessen werden. Vorteilhaft ist es, wenn einzelne Zellpakete, die Teile eines Akkumulators sind, durch einen Gruppenabgriff messtechnisch zusammengefasst sind, wobei die Messerfassung - sozusagen - durch Abgriffe im Inneren des Akkumulators hergestellt werden. Dadurch werden auf den Energieversorgungsleitungen aufgeprägte Störsignale durch Zellen, die jenseits des Abgriffs liegen, gepuffert. Die Abgriffsleitungen zu den Messsensoren sind durch einzelne Zellen des Akkumulators bedämpft.

Obwohl nur eine Teilspannung des Akkumulators gemessen wird, gelangt durch die redundante Messung mittels Zellenpaketmessung eine möglichst störungsfreie Datenübertragung zu dem Messdatensammler.

Aufgrund der Charakteristik der zu erwartenden Akkumulatorparameterveränderungen ist es vorteilhaft, wenn eine Zahlenkodierung gewählt wird, die gegebenenfalls (geringfügig) fehlerbehaftet sein kann, jedoch äußerst kompakt Daten überträgt. Im Rahmen von verschiedenen Studien hat es sich gezeigt, dass eine Acht-Bit-Fließ-Integer-Übertragung, insbesondere mit einer 2-, 3- oder 4-Bit-Mantisse und einem 3-, 4- oder 5-Bit-Exponenten sowie ggf. einem Vorzeichenbit, als Teil eines Messdatensatzes zuverlässig und gut Parameter überträgt.

Außerdem ist es auch möglich, neben den dargestellten Kodierungsverfahren zur Übertragung weitere Kodierungs- und Übertragungsverfahren vorzusehen, die als drittes, viertes usw. Übertragungsverfahren von Messdatensätzen zu ihren eigenen Zeitpunkten Teil einer erfindungsgemäßen Messsteuerung sind.

Werden die zuvor abstrakter dargestellten Erfindungskomponenten zu einem Akkumulatormess- und -überwachungssystem zusammengefasst, das als ein verteiltes Messsystem realisiert ist, so kann dies wie folgt konzipiert werden:
Das verteilte Messsystem basiert auf den folgenden Komponenten, Teilen und messtechnischen, logischen und/oder signalbezogenen Aspekte bzw. Begrifflichkeiten:
- **Messaufnehmer:**
   Ausgestaltung einer technischen Einrichtung, die vorzugsweise genau einem Akkumulator zugeordnet wird und an diesem mittels Sensoren (daher auch als Messsensor bezeichenbar) einen oder mehrere Parameter misst, wobei es jedoch auch denkbar ist, dass eine etwas abweichende Ausgestaltung eines Messaufnehmers konkret keinem Akkumulator oder - in einer alternativen Ausgestaltung - einer ganzen Gruppe von Akkumulatoren zugeordnet ist
   (Beispiele:
      a) Stromsensor für einen ganzen Batteriestrang,
      b) Temperatursensor für die Raumtemperatur außerhalb des Batterieschranks etc.).
- **Parameter:**
   Physikalische Größe, vorzugsweise an einem Akkumulator oder einem Akkumulator-Array, deren Wert durch einmaliges oder mehrmaliges Messen (ggf. mit Mittelwertbildung) bestimmt werden kann, wobei der bei diesem Vorgang entstehende Zahlenwert auch als Messwert bezeichnet werden kann (siehe unten).
- **Messwert:**
   Durch einmaliges oder mehrmaliges Auslesen eines Sensorwertes (ggf. mit Mittelwertbildung) bestimmter momentaner Wert eines Parameters.
- **Messdatensatz:**
   Von einem Messaufnehmer auf einem Kommunikationskanal übertragenes Datenpaket bestimmten Inhalts, z. B. von Messpunkten oder von Sekantenwerten.
- **Messpunkt:**
   Tupel aus mindestens einem Parameter-Messwert (z. B. Spannung oder z. B. eine Kombination aus Spannung und Temperatur) und, falls erforderlich, einer zugehörigen Zeitangabe (Messzeitpunkt), wobei insbesondere festgestellt werden kann, ob eine solche vorhanden ist, damit daraus abgeleitet werden kann, dass alle enthaltenen Parameter-Messwerte zeitgleich zu diesem Messzeitpunkt ermittelt wurden.
- **Messzeitpunkt:**
   Angabe, zu welcher Zeit eine Messung erfolgte, wobei in einer optionalen Ausgestaltung die Messungen periodisch erfolgen können, d. h. in einem konstanten Messintervall wiederholt werden.
- **Sekantenwert:**
   Ein Paar von zwei Messpunkten, genannt Anfangs- und End(-mess-)punkt (oder auch "Vertices" der Sekante), das einen zeitlichen Verlauf der darin enthaltenen Parameter zwischen dem enthaltenen Anfangs- und Endzeitpunkt als Gerade, d. h. als linearen Verlauf über der Zeit, beschreibt, wobei der Sekantenwert insbesondere die numerische Darstellung einer Sekante ist, z. B. eines Geradenabschnitts, der als Teil eines größeren Polygonzuges aufgefasst werden kann.
- **Messdatensammler:**
   Technische Einrichtung, die Messdatensätze von einem oder mehreren Messaufnehmern speichert und verarbeitet; insbesondere werden empfangene Sekantenwerte vom Messdatensammler dazu verwendet, Informationen aus durch Kollision oder Kommunikationskanalstörung verlorengegangenen Messdatensätzen zu rekonstruieren und auf diesem Weg den zeitlichen Verlauf der gemessenen Parameter trotz dieser Störungen möglichst lückenlos zu dokumentieren bzw. einer Datenbank zuzuführen.

Das verteilte Messsystem kann z. B. auf einer Auswahl der folgenden Komponenten, Teile und messtechnischen, logischen und/oder signalbezogenen Aspekte bzw. Begrifflichkeiten aufbauen:
- **Messintervall:**
   Zeitlicher Abstand zwischen zwei aufeinanderfolgenden Messungen, d. h., im einfachsten Fall ist das verwendete Messintervall konstant, z. B. 10 Sekunden lang.
- **Vertex:**
   Messpunkt mit Zeitangabe, der einen Anfang oder ein Ende einer Sekante beschreibt.
- **Sekante:**
   Kleinste lineare Untereinheit eines Polygonzuges.
- **Polygonzug:**
   Aus mindestens einer Sekante gebildeter, insbesondere kontinuierlicher, stückweise linearer (=gerader) Kurvenzug, der den zeitlichen Verlauf eines oder mehrerer Parameter approximativ beschreibt, wobei eine derartige Beschreibung des Parameterverlaufs (aus messtechnischer Sicht) besonders zutreffend ist, wenn die Berechnung der Vertices bzw. der Sekantenwerte einen Set von Kriterien erfüllen, deren Einhaltung durch einen geeigneten Algorithmus, den Sekantenalgorithmus, garantiert wird, z. B. die eines konstanten maximalen Darstellungsfehlers.
- **Sekantenalgorithmus:**
   Berechnungsvorschrift und -regelwerk, anhand dessen im Messaufnehmer aus den fortlaufend ermittelten Messpunkten Vertices für einen oder mehrere Polygonzüge ermittelt werden, die ausgewählten Anforderungen genügen; so kann in einer beispielhaft umgesetzten Implementierung der Sekantenalgorithmus sicherstellen, dass die mit den ermittelten Vertices beschriebenen Polygonzüge den exakten Verlauf der Parameter-Messwerte über der Zeit mit einem maximalen Fehler wiedergeben, der als Darstellungsgenauigkeit bezeichnet wird.
- **Darstellungsgenauigkeit:**
   Maximale Abweichung des tatsächlichen Messwerteverlaufs von einer dazugehörigen approximativen Darstellung, hier durch einen Polygonzug.
- **Darstellungsfehler:**
   Abweichung einer Sekante oder eines ihrer Vertices von den tatsächlichen Messwerten zu einem gegebenen Zeitpunkt.

Diese voranstehend aufgeführten Begrifflichkeiten voraussetzend, können verschiedene Aspekte, die jeder für sich ein Wesen der Erfindung ausmachen und somit individuell beanspruchbar sind, erläutert werden.

Ein Polygonzug lässt sich vorteilhafterweise durch die Vertices darstellen. Solche Vertices sind sehr komprimiert wiedergegebene Sekantenbestimmungspunkte.

Misst ein Messaufnehmer oder Messsensor mehrere Parameter, so ist es vorteilhaft, wenn die Vertices oder die Messdatensätze nicht nur zu einem einzelnen Parameter einen Polygonzug wiedergeben, sondern tatsächlich eine Zahlenmenge oder sogar einen Tupel von Daten zur Verfügung stellen.

Für einige Ausgestaltungen ist es vorteilhaft, eine komprimierte Zwischenspeicherung von Messdaten im Messaufnehmer zur Verfügung zu haben, um diese Messdaten auch wesentlich später (mehrere Minuten später oder sogar Stunden oder Tage später) noch übertragen zu können. Dieser Aspekt ist aus wenigstens zwei Motiven heraus interessant:
1. Kurzzeitig können auch bei ungestörtem Kommunikationskanal einzelne Messdatensätze durch zu verschiedenen Zeitpunkten auftretende Kollisionen verloren gehen.
2. Im Notbetrieb einer unterbrechungsfreien Stromversorgung (auch "USV" bezeichnet) kann es durch erhöhte EMV-Belastung des Kommunikationskanals zu einem Komplettausfall des Empfangs kommen, der sogar mehrere Stunden dauern kann.

In beiden Fällen, genauer gesagt, in beiden Fehlerfällen (bzw. Fällen mit ungewünschtem Verhalten des verteilten Messsystems) besteht ein Interesse eines Nutzers des Messsystems darin, die aufgrund der Störung bzw. des Fehlerfalls nicht "live" (bzw. augenblicklich) erhältlichen Messwerte nachträglich zu rekonstruieren. Ein Ansatz einer technischen Lösung besteht dabei darin, zu einem späteren Zeitpunkt die Messdaten bzw. Messdatensätze erneut zu übertragen, so dass sie dann in die (zwischenzeitlich) entstandenen "Löcher" in der Datenbank des Messdatensammlers eingefügt werden können. Dies wird durch eine zeitversetzte erneute bzw. mehrfache Übertragung erreicht, wobei - nach dem Prinzip des Bernoulli-Prozesses - die Empfangswahrscheinlichkeit für die einzelnen Dateninhalte maximiert wird: Je häufiger ein Datum wie ein Messdatensatz übertragen wird, desto besser kann die Erfolgswahrscheinlichkeit, dass alle Messdaten im Messdatensammler ankommen, an 100 % angenähert werden. Dies setzt voraus, dass möglichst viele Messdaten über einen möglichst langen Zeitraum im Speicher gehalten werden, u. a. auch aus der Überlegung heraus, die Mehrfachübertragung über einen großen Zeitraum zu streuen (Minuten lang, Stunden lang oder sogar Tage lang).

Damit die Messdaten, die im Verlauf von vielen Stunden gesammelt bzw. gemessen worden sind, jedoch überhaupt Platz im für die Messdaten zur Verfügung stehenden Speicher finden, und vor allem ihre Übertragung mit wenig Aufwand erfolgen kann (insbesondere ohne die übertragenen Messdatensätze maßgeblich zu vergrößern, z. B. weniger als 100 % oder sogar weniger als 50 % zu vergrößern), werden die Messdaten in einer äußerst kompakten Form dargestellt, nämlich als aus sogenannten Sekanten bestehendes Polygon. Hierbei ist es vorteilhaft, wenn anstelle der einzelnen Messpunkte Eckpunkte des Polygons (die auch als Vertices bezeichnet werden können) übertragen werden.

Nach einer weiteren Implementierung eines Ausführungsbeispiels umfasst ein Messsystem:
- einen Sekantenalgorithmus für die Bestimmung von Vertices bzw. (verständlicher formuliert) Polygon-Vertices (Eckpunkte),
- eine Speicherung von Polygon-Vertices im Messaufnehmer bzw. in einem Speicher im Messaufnehmer, in dem Polygon-Vertices abgelegt werden können,
- einen Übertragungskanal, vereinfacht auch eine bzw. mehrere Übertragung(en) genannt, für/von Polygon-Vertices bzw. Sekantenwerten als Teil der übertragenen Messdatensätze,
- ein Zusammenfügen der empfangenen Sekantenwerte zu einem vollständigen Polygonzug im Messdatensammler.

Nachfolgend sollen Betriebsweisen bzw. Verfahrensschritte und Verfahrensabläufe in einigen Details vorgestellt werden, die als Ausgestaltungsvarianten in verschiedenen Kombinationen zusammengestellt werden können, insbesondere in Messsystemen ablaufen können bzw. eintreten können:
- Die zu einem Verbund zusammengeschlossenen Messaufnehmer arbeiten vorzugsweise periodisch, d. h. sie bestimmen einmal pro Arbeitszyklus einen Messwert und übertragen einen Messdatensatz an den Messdatensammler.
- Ein Messdatensatz kann durch Kollision mit einem oder mehreren Messdatensätzen anderer Messaufnehmer oder durch sonstige, z. B. von der USV erzeugte, Störungen im Kommunikationskanal verlorengehen.
- Um die Wahrscheinlichkeit für einen Eintritt von einem Verlust der zu einem definierten Zeitpunkt gemessenen Messwerte zu verkleinern, sollen die zu diesem definierten Zeitpunkt gemessenen Messwerte mehrfach, d. h. auch noch ein Mehrfaches der Dauer zwischen zwei Messwertsätzen später, sozusagen nachträglich, und möglichst oft, übertragen werden. Das bedeutet, dass ein Messdatensatz jeweils nicht nur die zum jeweiligen Zeitpunkt aktuellen bzw. aktuellsten Messwerte, sondern auch Informationen über zurückliegende, in der Vergangenheit gemessene, Messwerte enthalten darf. Bei einer solchen Übertragung sind neben den aktuellen Messwerten auch zeitlich zurückliegende Messwerte im Speicher des Messaufnehmers vorzuhalten.
- Würde man nun die zeitlich zurückliegenden Messwerte, zusammen mit der Information über den zugehörigen Zeitpunkt, als Messpunkte 1:1 speichern oder übertragen, so würde der Speicherbedarf bzw. die Menge der zu übertragenen Zeichen linear mit dem abzudeckenden Zeitraum anwachsen. Für 100 oder 1000 Messpunkte betrüge also der Speicherbedarf bzw. Übertragungsaufwand das 100- oder 1000-fache desjenigen für einen einzelnen Datenpunkt; dem beugt die kompaktere Archivierung und die kompaktere Übertragung vor.
   Nach einem Aspekt der Erfindung kann auch gesagt werden, dass ein Vorteil in dem Ansatz zur Datenreduktion/-komprimierung liegt, um möglichst viele Messdatenpunkte mit möglichst wenig Datenbytes im Speicher des Messaufnehmers darstellen bzw. diese mit kompakten Datenpaketen (es kann auch gesagt werden: "effizient") übertragen zu können. Das verwendete Mittel ist die Darstellung des Messwerteverlaufes über der Zeit durch Geradenabschnitte (als Sekanten bezeichnet), die einen Polygonzug ergeben. Dass der Polygonzug notwendigerweise eine Approximation des exakten Messdatenverlaufs darstellt und daher in einem oder mehreren Zeitpunkten mehr oder weniger von den exakten Messdaten abweichen wird, kann in Kauf genommen werden, weil die Abweichung innerhalb von voreingestellten Grenzen bleibt (wie bei jeder verlustbehafteten Datenkompression).
- Die Erfindung kann auch anhand eines weiteren Aspektes, nämlich anhand des als Teil der Erfindung realisierten Algorithmus behandelt werden, der in den Messaufnehmern in Echtzeit die Eckpunkte (nach einer Definition durch "Vertices" als Anfangs- und Endpunkte einer Sekante) eines solchen Polygonzuges bestimmt. Der Algorithmus kann also als Sekantenalgorithmus bezeichnet werden. Dabei wird dieser Sekantenalgorithmus vorteilhafterweise so gestaltet, dass diese Abweichung ein vorgegebenes absolutes Maß (i. S. einer "Fehlerschranke") garantiert nicht überschreitet (was auch als "vorgegebene Darstellungsgenauigkeit" bezeichnet werden kann).
- Die Messaufnehmer übertragen in ihren Messdatensätzen jeweils aktuelle Messwerte und/oder Sekantenwerte.
- In einer Ausgestaltung ist der Messdatensammler so gestaltet, dass er die messtechnisch eingegangenen bzw. von ihm gemessenen Sekantenwerte zu einem Polygonzug zusammenfügt und in einer Datenbank ablegt.
- In dem Fall, dass ein Kommunikationskanal, z. B. zeitweise, gestört ist oder war, so kann der Messwerteverlauf des betreffenden Zeitraums anhand der Sekantenwerte vollständig rekonstruiert werden. Eine der Voraussetzungen hierfür ist lediglich, dass die in diesen Zeitraum fallenden Sekanten noch hinreichend lange in den Messaufnehmern vorhanden bleiben, um noch so hinreichend oft übertragen zu werden.
- Einer der Ziele hinter der Übertragungshäufigkeit ist es, dass für jede der Sekanten wenigstens ein Messdatensatz ohne Verlust im Messdatensammler empfangen wird. Idealerweise wird die Übertragungshäufigkeit und die Übertragungswiederholrate auf das Ziel abgestimmt.

Werden übliche Bearbeitungsgeschwindigkeiten von, insbesondere mit Mikroprozessoren oder Mikrokontrollern realisierte, Messelektroniken im Vergleich mit Ladungs- und Entladungsgeschwindigkeiten von Akkumulator-Arrays betrachtet, so darf bei einer solchen Gegenüberstellung das Akkumulatorensystem bzw. das Akkumulatoren-Array als träges bzw. langsames System qualifiziert werden. Insbesondere Akkumulatorensysteme, die mit Bleiakkumulatoren oder mit Nickel-Metallhydrid-Akkumulatoren aufgebaut sind, sind Akkumulatoren, die in der Regel für kurzanhaltende Spitzenströme ausgelegt sind und erst nach Lieferung eines Spitzenstroms über einen (vergleichsweise) längeren Zeitraum einen (bemerkenswerten) Spannungseinbruch erfahren. Die einzelnen Spannungen, natürlich auch andere, einen Akkumulator beschreibende Parameter, können als Absolutwert behandelt werden. Im Laufe der Zeit, zum Ablauf einer Zeitperiode, ändert sich der Absolutwert. Ein Messaufnehmer, der einem Akkumulator zugeordnet ist, ist dafür vorgesehen, zunächst einmal die Änderung eines Wertes des Parameters zu messen, insbesondere eines Absolutwertes, wie z. B. ein Spannungswert einer Gruppe von Zellen. Die Gruppe von Zellen stellt einen Teil oder den gesamten Akkumulator (aus energietechnischer Perspektive) dar. Gegenüber der Zeit kann die Änderung der Werte bzw. der Parameter durch einen Gradienten beschrieben werden. Eine weitere Charakterisierungsmöglichkeit ist die Bestimmung einer maximal möglichen Änderungsweite, will sagen, Sprungweite. In einem regulären Betrieb, d. h. z. B. nicht zu einem Betriebszeitende oder z. B. während einer Phase einer Tiefentladung, hat der Akkumulator, sofern er spezifikationsgemäß betrieben wird, eine geringe Spannungssinkrate. In einem solchen Fall kann eine nächste Messung, also eine Messung, die sich durch einen gewissen Zeitabstand von einer ersten Messung unterscheidet, nach längerer Zeit, insbesondere erst nach mehreren Sekunden, Minuten oder Stunden, durchgeführt werden. Trotzdem werden verlässliche Werte ermittelt, sofern keine sonstigen Messfehler auftreten.

Mit dem Begriff CAN-Bus werden gewisse Gruppen von physikalisch miteinander verbundenen Bussen bezeichnet, die auf gewissen Spannungsniveaus arbeiten, insbesondere terminiert durch am Ende des Datenbusses abschließend angeordnete Widerstände. Mit dem Begriff CAN-Bus werden aber auch softwaremäßig umzusetzende Protokolle bezeichnet. Somit ist es möglich, ein Bus-System als CAN-Bus zu bezeichnen, das entweder nur physikalisch, insbesondere spannungsmäßig einem CAN-Bus entspricht, aber auch solche Bus-Systeme als CAN-Bus zu bezeichnen, die nur softwaremäßig, d. h. insbesondere in Bezug auf die Verarbeitungslogik einem CAN-Bus entsprechen. Bussysteme, die sowohl hardwaremäßig als auch softwaremäßig einem CAN-Bus-Protokoll entsprechen, werden hinlänglich ebenfalls als CAN-Bus bezeichnet.

Ein erfindungsgemäßes System lässt sich in einer Ausgestaltung wie folgt implementieren:
In einem Speicher, der jeweils in jedem der vorhandenen Messaufnehmer vorhanden ist, mit anderen Worten, jeder Messaufnehmer hat seinen eigenen Speicher, werden neben den aktuellen Messwerten auch Polygonzüge in Form von Sekantenvertices gespeichert. Anhand der Sekantenvertices lassen sich die zeitlich zurückliegenden Messdaten beschreiben.

Sekanten, deren Anfangs- und Endzeitpunkt in der Vergangenheit liegen, werden gelöscht, wenn sie ein bestimmtes Alter erreicht haben (z. B. mehr als 65535 Messungen zurückliegen). Diejenige Sekante, die im aktuellen Messwert endet, wird bei der nächsten Messung aktualisiert (verlängert). Es kann aber auch der Fall eintreten, dass statt einer Verlängerung der bisherigen Sekante eine neue Sekante begonnen wird, insbesondere in dem Fall, in dem eine Aktualisierung der alten Sekante zu einer Grenzwertüberschreitung führt, z. B. dass dabei die (festgesetzte) Fehlerschranke verletzt wird.

Ist bei einer Aktualisierung der Daten der Speicher eines Messaufnehmers voll, wird bei dieser Gelegenheit die älteste im Speicher liegende Sekante verworfen (i. S. von "überschrieben").

Wird mit einem Speicher operiert, der z. B. 65.536 Messpunkte aufnehmen und archivieren kann, so ergibt sich in einer Ausgestaltung das folgende Zahlenbeispiel:
Eine Sekante des Langzeit-Logs wird durch zwei Vertices zu je 5 Byte beschrieben und kann im Idealfall bis zu 65.536 Messpunkte (z. B. einzelne Werte zu "Spannung", "Temperatur", "Zeitpunkt" usw.) repräsentieren (entsprechende "Glattheit" der Messdaten vorausgesetzt).

Daten eines einzelnen Messpunkts können z. B. 3 Byte groß sein (Messpunkt "Spannung", Messpunkt "Temperatur" oder Messpunkt "Spannung in Kombination mit Temperatur").

Würden alle Messpunkte einzeln archieviert, so beanspruchten 65.536 solcher Messpunkte etwa 196 kByte Speicher. Im Vergleich zu einer Sekante, die lediglich mit nur 10 Byte auskommen kann. Auf Grundlage der zusammengestellten Daten, kann der Datenkompressionsfaktor bei Verwendung von Sekanten also bis etwa 1 zu 19.600 betragen.

Eine derart realisierte Umsetzung bzw. Implementierung speichert bis zu 128 Vertices in 640 Bytes ab. D. h., entsprechend viele Details sind über einen Zeitraum von bis zu 65.535 zurückliegenden Messungen darstellbar, was bei einem Messraster von 10 Sekunden etwa 7,5 Tagen entspricht.

Jeder auf dem Kommunikationskanal übertragene Messdatensatz enthält nun neben den aktuellen Messwerten wenigstens einen Sekantenwert, der vergangene Messdaten repräsentiert. Wenn im Speicher des Messaufnehmers mehrere Sekanten vorhanden sind, werden diese der Reihe nach, zyklisch wiederkehrend, in aufeinanderfolgenden Messdatensätzen übertragen.

Hierbei kann mit verschiedenen Messdatensatz-Typen operiert werden, z. B. kann mit einem "Typ 1" und einem "Typ 2" operiert werden:
∘ Typ 1 ("Kurzzeit-Log"-Typ):
   Dieser Typ ("Typ 1") dient der Darstellung der jüngsten **Messdatenvergangenheit,** wodurch diese im Messdatensammler zeitnah rekonstruierbar sind. Solche Typen können zum Einsatz kommen, wenn Messdatensätze durch Kollision oder leichte EMV-Störungen verloren gegangen sind. Es gibt Fälle, bei denen der Kommunikationskanal ansonsten eigentlich nicht besonders stark gestört ist. Grundsätzlich ist eine Übertragung zu fast allen Zeitpunkten komplett möglich (es kann von einer "stehenden Verbindung" ausgegangen werden).
   In einer beispielhaften Ausführungsform arbeitet dieser Typ ("Typ 1") mit genau zwei Sekanten, deren jede eine Anzahl von Messpunkten in einem Wertebereich von 2 bis maximal z. B. 129 Messpunkten repräsentiert (Begrenzung bedingt durch die gewählte sehr kompakte Form der übertragenen Datenpakete). Auf diese Weise kann dieser Typ ("Typ 1") die Messungen von bis zu 256 Messungen in die Vergangenheit hinein darstellen (bei einem Messintervall von 10 Sekunden zwischen zwei Messungen sind das (in Summe) etwa 43 Minuten). Idealerweise überträgt ein Messdatensatz stets beide Sekanten des Kurzzeit-Logs gleichzeitig.
∘ Typ 2 ("Langzeit-Log"-Typ):
   Dieser Typ ("Typ 2") dient der Darstellung einer längeren Messdatenvergangenheit, wodurch nach einer längeren Zeit einer Totalstörung des Kommunikationskanals (z. B. hervorgerufen durch einen Komplettausfall des Empfangs, etwa während eines Notbetriebs, für einen Zeitraum von 10 min oder sogar von mehreren Stunden) die zwischenzeitlichen Messungen möglichst vollumfänglich im Messdatensammler rekonstruierbar sind. In der vorliegenden beispielhaften Ausführungsform dieses Typs können maximal 128 Sekanten im Speicher gehalten werden. Eine einzelne Sekante kann dabei bis zu 65.535 Messpunkte darstellen und ihr Endpunkt um maximal 65.535 Messintervalle in der Vergangenheit liegen. Der darstellbare Zeitraum beträgt somit maximal 131.071 Messintervalle (Bei einem Messintervall von 10 Sekunden beträgt der Zeitraum ungefähr (bzw. "gute") 15 Tage bei konstant bleibenden oder sich mit einer konstanten Rate ändernden Messwerten. Tritt eine Änderung bei den Messwerten ein, so kann von dem Messaufnehmer geprüft werden, ob für die Darstellung aller Details 128 Sekanten ausreichen. In dem Fall beträgt der darstellbare Zeitraum mindestens 7,5 Tage).

Die ausreichend häufige (=redundante) Übertragung identischer Daten (z. B. durch einen Rundenzähler oder durch einen mittels touring-Zähler initiierte Übertragung, die beispielsweise im Sekundentakt einzelne Messdatensätze überträgt und durch die eine wiederholende Übertragung stattfindet), wodurch durch Kollision und Kommunikationskanalstörungen drohende Datenverluste vermeidbar sind, wird in der vorliegenden Implementierung durch entsprechende Dimensionierung von Speichergröße, maximaler Sekantenlänge etc. ein vollständiger Kurvenverlauf im Empfänger "Messdatensammler" sichergestellt.

Nun möge ein weiteres Zahlenbeispiel die technische Realisierung der vorstehend erläuterten Lehre verdeutlichen:
Bei 160 Messaufnehmern bzw. Messsensoren beträgt eine Wahrscheinlichkeit, dass ein Messdatensatz eines Messaufnehmers nicht mit irgendeinem Messdatensatz eines anderen Messaufnehmers kollidiert (i. S. einer Kollision der Übertragungen bzw. der Zeitpunkte der Übertragung), 37 %. Wird ein Detail aus diesem Messdatensatz, z. B. ein Sekantenwert, auch in weiteren Messdatensätzen übertragen, z. B. im Ganzen 32 mal, so beträgt die Wahrscheinlichkeit, dass der Messdatensatz mindestens einmal ohne Kollision den Messdatensammler erreicht, 99,99996%, was bei 10 Sekunden Messintervall weniger als 2 Messpunkten pro Jahr und Messsensor an Datenausfall entspricht. Eine einzelne Sekante des Messtyps "Langzeit-Log" kann, sofern sie nicht (bei vollem Speicher) von einer anderen überschrieben wird, bis zu 128 Mal übertragen werden.

Als weitere interessante Tatsache mag hervorzuheben sein, dass ein auf dem zuvor vorgestellten Algorithmus basierendes Messverfahren versucht, eine Folge eingehender Messpunkte als stückweise linear zu beschreiben. Ausgehend von einem einzelnen Messpunkt wird daher angenommen, dass die folgenden Messpunkte mit dem ersten (annähernd) auf einer Geraden liegen, deren Steigung zunächst unbekannt ist. Der Algorithmus macht daher keine Vorgabe, wie groß die Steigung sein soll, sondern er definiert für diese lediglich eine obere und eine untere Schranke, die auf Basis der ersten zwei Messpunkte - nach Maßgabe der vorgegebenen absoluten Darstellungsgenauigkeit - berechnet wird. Diese Schranken werden kontinuierlich angepasst, so lange die eingehenden neuen Messpunkte zu ihnen "passen", d. h. tatsächlich durch eine gemeinsame Gerade approximierbar sind. Dabei bewegen sich obere und untere Schranken nach und nach (quasi konvergierend) auf einen Wert zu. Die Schranken schränken das Steigungsintervall und den vertikalen Bereich immer weiter ein, in denen weitere, akzeptable Messpunkte liegen, die noch als zur selben Gerade "zugehörig" erachtet werden. Wird ein Messpunkt gefunden, der außerhalb der Schranken bzw. Grenzwerte liegt, so wird die bisherige Gerade als "abgeschlossen" betrachtet. Es wird eine neue Gerade begonnen, mit einer neuen, ebenfalls am Anfang unbekannten Steigung.

Auch kann hervorgehoben werden, dass verschiedene Ausgestaltungen des Sekantenalgorithmus keinerlei Annahmen über absolute Werte einer Geradensteigung machen. In diesen Ausgestaltungen werden auch keine absoluten Werte vorgegeben.

In einer weiteren Ausgestaltung kann der Sekantenalgorithmus mit einer einzigen Konstante operieren, die nämlich die absolute Darstellungsgenauigkeit festlegt. Damit lässt sich erreichen, dass der Algorithmus skalierungsinvariant gegenüber der Zeitachse ist, d. h. ein Messwerteverlauf, der einer Form folgt, wird immer in dieselbe Anzahl Sekanten zerlegt. Hierbei ist es gleich bzw. unbedeutend oder uninteressant, ob er sich über eine Minute oder über viele Stunden erstreckt.

Außerdem sei hervorgehoben, dass das Messverfahren bzw. die Messsteuerung und die dazugehörige Messeinrichtung, die wenigstens einen Messaufnehmer umfasst, besonders vorteilhaft mit trägen, d. h. mit sich langsam ändernden Messgrößen und zu messenden Parametern operieren können (als "träge" können solche Parameter und Messgrößen angesehen werden, die - je nach Ausgestaltung der Messsteuerung - minutenlang, stundenlang oder sogar tagelang innerhalb des Grenzwertes oder der Grenzwerte, d. h. innerhalb der (festgesetzten) Fehlerschranken verbleiben). In solchen Systemen von z. B. entsprechend groß dimensionierten Akkumulatoren-Arrays (Akkumulatoren und Akkumulatoren-Arrays mit Ladungen von mehreren Amperestunden (Ah), insbesondere drei-, vier- und fünfstelligen Amperestundenzahlen), die messtechnisch überwacht werden sollen, spielt das vorgestellte Messverfahren bzw. die vorgestellte Messsteuerung besonders stark seine Vorteile aus. In solchen Systemen kann mit einer besonders hohen Datenkompression operiert werden.

Dank des zuvor vorgestellten Verfahrens können Daten sicher zum Messdatensammler übertragen werden, selbst wenn die Verbindung zeitweise gestört war oder ist. Daten werden unter einander zeitlich versetzt und idealerweise mehrfach auf dem Kommunikationskanal übertragen, wodurch auch ältere Daten, die möglicherweise zu einem Zeitpunkt entstanden sind, zu dem eine Störung auf dem Kommunikationskanal herrschte, zeitlich versetzt, d. h. nachträglich zum Messdatensammler übertragen werden können.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 eine Energieversorgungseinrichtung mit mehreren Akkumulatoren und einem Messsystem zeigt,
Figur 2 anhand von Mess- und Berechnungskurven eine Übertragung auf einem Kommunikationskanal zu einem Messdatensammler zeigt,
Figur 3 einen beispielhaften Spannungs- und Temperaturverlauf mit einzelnen Messpunkten zeigt, die von einem Messaufnehmer gemessen werden können,
Figur 4 extrahierte Spannungs- und Temperatur-Polygonzüge mit individuell, durch Berechnungsalgorithmus berechnete Stützstellen zeigt, die ein Messaufnehmer einer ersten Ausführungsform so gestaltet im Speicher ablegen kann und/oder auf einem Übertragungskanal übertragen kann,
Figur 5 Spannungs- und Temperatur-Polygonzüge mit gemeinsamen Stützstellen zeigt, die ein Messaufnehmer einer zweiten Ausführungsform so gestaltet im Speicher ablegen kann und/oder auf einem Übertragungskanal übertragen kann,
Figuren 6 bis 8 einzelne Momente bzw. Zeitpunkte in der Berechnung eines Sekantenalgorithmus zeigt,
Figur 9 ein "Kurzzeit-Log" im Sinne eines "Typ 1"-Messdatensatzes zeigt und
Figur 10 ein "Langzeit-Log" im Sinne eines "Typ 2"-Messdatensatzes zeigt.

### Figurenbeschreibung

Die in den einzelnen Figuren gezeigten Ausgestaltungsmöglichkeiten lassen sich auch untereinander in beliebiger Form verbinden.

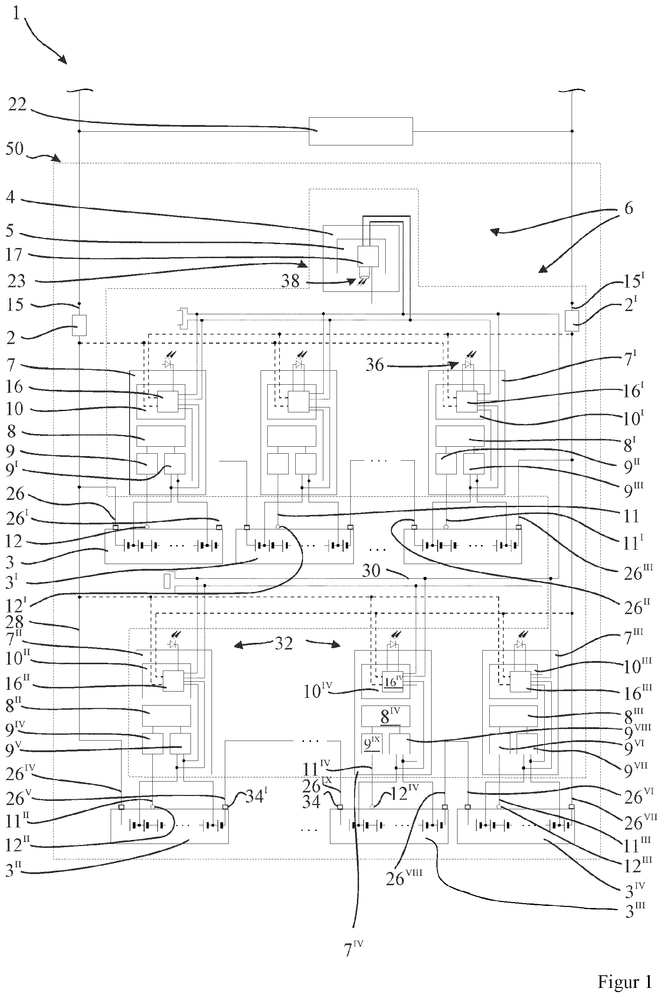

Figur 1 zeigt in schematischer Darstellung ein Messsystem 6, das eine größere Gruppe Akkumulatoren 3, 3^{I}, 3", 3^{III}, 3^{IV} einer Energieversorgungseinrichtung 1 durch eine zentral angeordnete Überwachungselektronik 4 bzw. einen Messdatensammler überwachen kann. Die Energie der teilweise in Serie und teilweise parallel verschalteten Energiespeicherpakete 3, 3^{I}, 3^{II}, 3^{III}, 3^{IV} wird über Energieleitungsanschlüsse 2, 2^{I} an Verbraucher, wie die Last 22, abgegeben.

Teile des Messsystems 6 sind eine Überwachungselektronik 4 und den Akkumulatoren 3, 3', 3", 3^{III}, 3^{IV} zugeordnete Messaufnehmer 7, 7^{I}, 7^{II}, 7^{III}, 7^{IV}, die auch als Messsensoren bezeichnet werden können, insbesondere in den Fällen, in denen die messtechnische Parameterermittlung im Vordergrund bei der funktionellen Betrachtung steht. Die Überwachungselektronik 4, die auch einen Messdatensammler umfasst, umfasst außerdem einen Empfänger 5. Hierüber können Datensätze auf den Energieleitungen 15, 15^{I} abgegriffen werden.

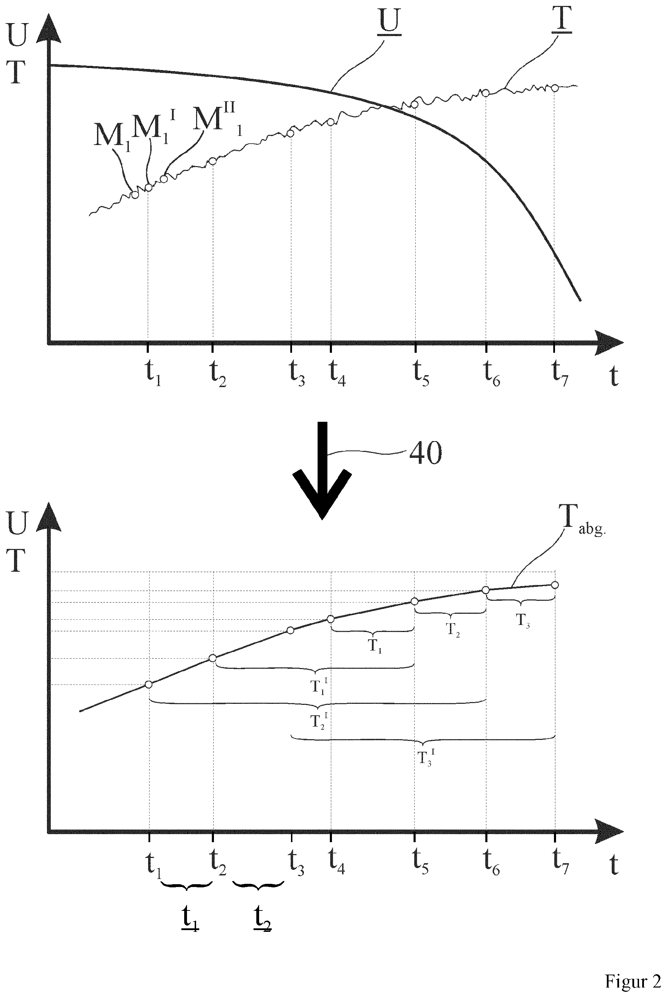

Die Energieversorgungseinrichtung 1 gemäß Figur 1 ist dazu bestimmt, über Energieleitungsanschlüsse 2, 2^{I} Energie aus Energiespeicherpaketen 3, 3^{I}, 3", 3^{III}, 3^{IV} wie BleiAkkumulatoren wenigstens einer Last 22, z. B. einem Serversystem, zur Verfügung zu stellen. Hierbei treten Belastungen für die Energiespeicherpakete 3, 3^{I}, 3", 3^{III}, 3^{IV} auf. Damit die Energie auf den Energieleitungen 15, 15^{I} möglichst gut gesteuert der Last 22, z. B. in Form einer Wechselspannung, zur Verfügung gestellt werden kann, sammelt der Messdatensammler bzw. die Überwachungselektronik 4 mit seinem Empfänger 5 Daten, die über wenigstens einen der Kommunikationskanäle 28, 30, 32 zur Verfügung gestellt werden. Insgesamt bildet sich eine Batterieüberwachungseinrichtung 50 durch das Zusammenwirken einer größeren Anzahl Messaufnehmer 7, 7^{I}, 7^{II}, 7^{III}, 7^{IV} und dem Messdatensammler 4 als Teil der Überwachungselektronik. Ein Messaufnehmer 7, 7^{I}, 7^{II}, 7^{III}, 7^{IV} umfasst eine Messeinrichtung 9, 9^{I}, 9^{II}, 9^{III}, 9^{IV}, 9^{V}, 9^{VI}, 9^{VII},9^{VIII}, 9^{IX}, einen Mikrokontroller 8, 8^{I}, 8^{II}, 8^{III}, 8^{IV} und einen Sender 10, 10^{I}, 10", 10^{III}, 10^{IV}. Der Mikrokontroller 8, 8^{I}, 8", 8^{III}, 8^{IV} führt Berechnungen durch, um die durch die Messeinrichtung 9, 9^{I}, 9^{II}, 9^{III}, 9^{IV}, 9^{V}, 9^{VI}, 9^{VII}, 9^{VIII}, 9^{IX} gemessenen Daten in einer aufbereiteten Form, die sich günstiger Weise anhand der Figur 2 erläutern lässt, über eine Kette aus Modulator 16, 16', 16", 16^{III}, 16^{IV} und einem Demodulator 17 der Überwachungselektronik 4 zur Verfügung zu stellen.

Eine Messeinrichtung, wie die Messeinrichtung 9, 9^{I}, 9^{II}, 9^{III}, 9^{IV}, 9^{V}, 9^{VI}, 9^{VII}, 9^{VIII}, 9^{IX}, misst auf verschiedene Arten unterschiedliche Parameter, z. B. über den Messpunkt 12, 12', 12", 12^{III}, 12^{IV} eine Temperatur eines Energiespeicherpaketes 3, 3^{I}, 3^{II}, 3^{III}, 3^{IV}. Über Anschlüsse 11, 11^{I}, 11^{II}, 11^{III}, 11^{IV} können Spannungen einzelner Zellen oder Gruppen von Zellen der Energiespeicher bzw. Energiespeicherpakete 3, 3^{I}, 3", 3^{III}, 3^{IV} gemessen werden. Die Energiespeicherpakete 3, 3^{I}, 3", 3^{III}, 3^{IV} haben Pole wie die Pole 34, 34^{I}, die als Energieanschluss 26, 26', 26", 26^{III}, 26^{IV}, 26^{V}, 26^{VI}, 26^{VII}, 26^{VIII}, 26^{IX} zur Verfügung stehen. Durch eine serielle Verschaltung einzelner Energiespeicherpakete 3, 3^{I}, 3^{II}, 3^{III}, 3^{IV} bzw. eine parallele Verschaltung von, idealerweise mehreren, durch eine serielle Verschaltung jeweils zu einem Strang gruppierten Energiespeicherpaketen 3, 3^{I}, 3^{II}, 3^{III}, 3^{IV} bildet sich eine Quelle für die Abgabe elektrischer Energie an den Energieanschlüssen 26, 26', 26", 26^{III}, 26^{IV}, 26^{V}, 26^{VI}, 26^{VII}, 26^{VIII}, 26^{IX}, die dann auch an den Energieleitungen 15, 15^{I} zur Verfügung steht.

Die gesamte Anordnung kann auch (elektrochemisch nicht ganz korrekt) als Batterieüberwachung 23 bezeichnet werden, die sich somit als verteiltes System aus (u. a.) Messaufnehmern 7, 7^{I}, 7^{II}, 7^{III}, 7^{IV} und wenigstens einem Messdatensammler 4 zusammensetzt.

Wie ebenfalls aus der Figur 1 zu entnehmen ist, gibt es drei verschiedene Kommunikationskanäle 28, 30, 32. Der erste Kommunikationskanal 28 benutzt die Energieleitungen 15, 15^{I}. Der zweite Kommunikationskanal 30 überträgt über einen speziellen Bus, genauer über einen (aus einem elektrischen oder hardware-bezogenen Blickwinkel gesehenen) CAN-Bus (siehe z. B. die terminierenden Widerstände). Der dritte Kommunikationskanal 32 bildet sich durch Lichtübertragung aus, wie an den Lichtemittern 36, den LEDs und an dem lichtabhängigen Widerstand, dem Empfänger 38 im Blockschaltbild der Figur 1 zu erkennen.

Aus dem Blockschaltbild der Figur 1 ist zu entnehmen, dass die Energieanschlüsse 26, 26^{I}, 26^{II}, 26^{III}, 26^{IV}, 26^{V}, 26^{VI}, 26^{VII}, 26^{VIII}, 26^{IX} an anderen Stellen zwischen den Zellen der Energiespeicherpakete 3, 3^{I}, 3", 3^{III}, 3^{IV} eine Spannung abgreifen als die Anschlüsse 11, 11^{I}, 11^{II}, 11^{III}, 11^{IV} für die Messeinrichtung 9, 9^{I}, 9^{II}, 9^{III}, 9^{IV}, 9^{V}, 9^{VI}, g^{VII},9^{VIII}, 9^{IX}. So ist es möglich, dass einzelne Zellen eines Energiespeicherpaketes 3, 3^{I}, 3", 3^{III}, 3^{IV} als Bedämpfungsglieder zwischen Energieleitung 15, 15^{I} und dem Anschluss 11, 11^{I}, 11", 11^{III}, 11^{IV} für die Messeinrichtung 9, 9^{I}, 9^{II}, 9^{III}, 9^{IV}, 9^{V}, 9^{VI}, 9^{VII},9^{VIII}, 9^{IX} zwischengeschaltet sind.

In Figur 2 ist dargestellt, wie eine reale Messkurve U, T, die zwei, über eine Zeit t veränderliche Parameter U (Spannung), T (Temperatur) umfasst, nach einer Übertragung 40 über zumindest einen der Kommunikationskanäle 28, 30, 32 an den Messdatensammler 4 (siehe Figur 1) in eine approximierte Kurve T_{abg.} übergeführt ist. Aus Figur 2 ist die kurvenverlaufsabhängige Behandlung jeder einzelnen Messkurve U, T herauszulesen. Während die Messkurve T im Rahmen der Übertragung 40 umzuwandeln ist, kann aufgrund des angewendeten Sekantenverfahrens und der in dem Sekantenverfahren benutzten Grenzwerte die Messkurve U ohne einen Endpunkt bzw. eine Endpunktbildung für die Schaffung der Sekante im betrachten Zeitintervall zwischen t₁ und t₇ auskommen. Zu einzelnen Zeitpunkten, wie dem Zeitpunkt t₁, t₂, t₃, t₄, t₅, t₆, t₇, werden einzelne Messungen zur Bestimmung der Messpunkte M₁, M^{I}₁, M^{II}₁ durchgeführt, aus denen ein (gemittelter) Messpunkt bestimmt wird. Mehrere Messungen mit ihren Messpunkten M₁, M^{I}₁, M^{II}₁ werden zu einem Messpunkt approximiert, mit dem die weiteren Berechnungen als Wert für eine Zeit t₁ durchgeführt wird. Nach einer Wiederholrate t₁, t₂ (tau) findet eine weitere Messung zu einem weiteren Zeitpunkt t₂, t₃ statt.

Nach der Übertragung 40 der Datensätze an den Messdatensammler 4 findet eine Polygonzugzusammensetzung der abgeleiteten Messkurve T_{apg.} durch Kombination der Sekantenwerte T₁, T₂, T₃, T₁^{I}, T₂^{I}, T₃^{I} statt. Die Sekantenwerte T₁, T₂, T₃ sind für eine andere Polygonzugzusammensetzung bestimmt (andere Berechnungsmethode) als die Sekantenwerte T₁^{I}, T₂^{I}, T₃^{I}, die sich über größere Zeiträume als die kürzeren Sekanten der Sekantenwerte T₁, T₂, T₃ erstrecken. Hierbei sind die Zeitperioden, über die sich einzelne Sekanten T₁, T₂, T₃, T₁^{I}, T₂^{I}, T₃^{I} erstrecken, unterschiedlich lang. Die Messkurve T_{abg}. ist eine mehrere Parameter vereinende, approximierende Kurve.

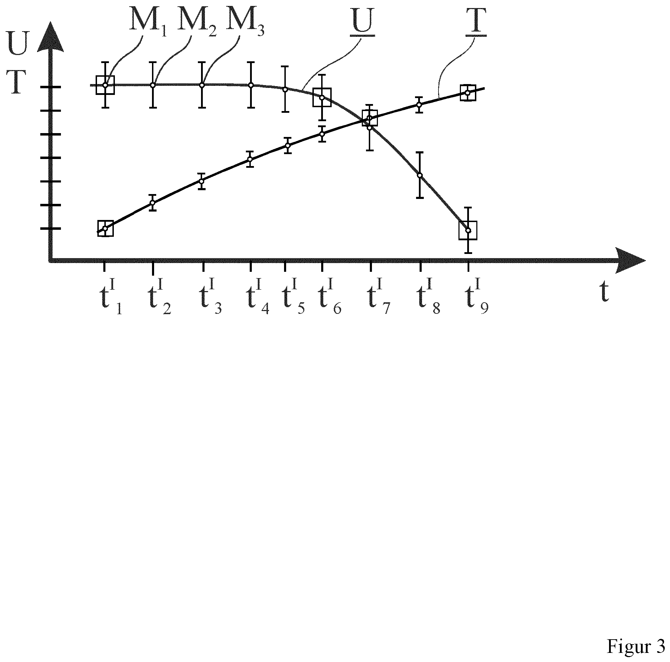

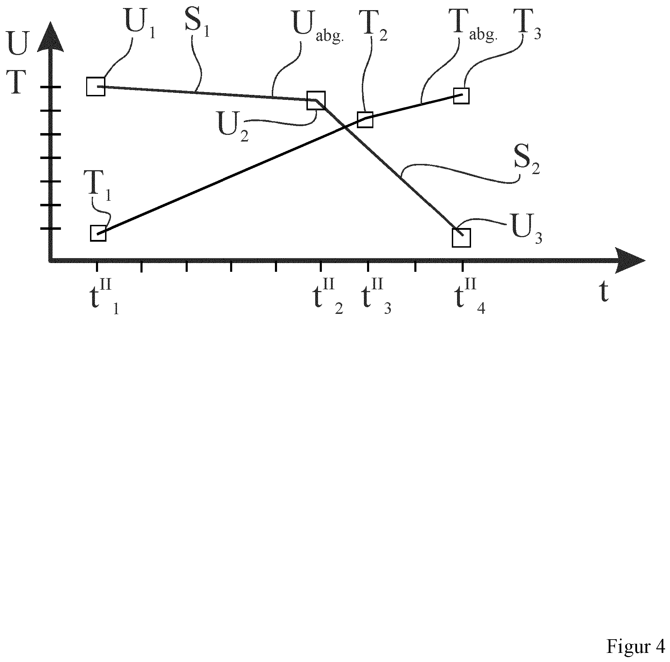

Steht als Ausgangskurvenverlauf für Messungen eines Messaufnehmers, wie einem der Messaufnehmer 7, 7^{I}, 7^{II},7^{III} und 7^{IV} (nach Figur 1), eine in Figur 3 gezeigte Parameterentwicklung bzw. Parameterveränderung an dem Messaufnehmer an, so kann der Messaufnehmer so programmiert sein, dass er in regelmäßigen Abständen, genauer gesagt, zu ausgewählten Zeitpunkten t^{I}₁, t^{I}₂, t^{I}₃, t^{I}₄, t^{I}₅, t^{I}₆, t^{I}₇, t^{I}₈, t^{I}₉ den am Messpunkt M₁, M₂, M₃ anliegenden Parameterwert (z. B. ein Wert der Spannung U oder ein Wert der Temperatur T) ermittelt. Der Sekantenalgorithmus, der in dem Messaufnehmer ausgeführt wird, bestimmt dann u. a., ob ein Spannungswert U₁, U₂, U₃ oder ein Temperaturwert Ť₁, Ť₂, Ť₃ (vgl. Figur 4) in einen auf einen Zeitpunkt bezogenen Vertex umzuwandeln ist (vgl. die mit rechteckigen Kästchen markierte Messpunkte wie den Messpunkt M₁). Die einzelnen Kurven, wie die Spannungskurve U oder die Temperaturkurve T, werden von dem Messaufnehmer nur zu bestimmten bzw. diskreten Zeitpunkten t^{I}₁, t^{I}₂, t^{I}₃, t^{I}₄, t^{I}₅, t^{I}₆, t^{I}₇, t^{I}₈, t^{I}₉ gemessen. Diese bereits datenmäßig reduzierte Kurvenverlaufswiedergabe der Spannungskurve U und der Temperaturkurve T wird mittels der Vertex-Bildung bzw. der Sekantenbildung weiter reduziert.

Nach der in dem Messaufnehmer vorzunehmenden Umwandlung der Daten, die anfänglich als Verlauf der Spannungskurve U und als Verlauf der Temperaturkurve T (siehe Figur 3) vorliegen, in Verläufe bzw. Kurvenformen auf Basis von Sekanten S1, S2 (siehe Figur 4) werden, wie aus Figur 4 abgelesen werden kann, die Kurven durch stückweise stetige, möglichst gerade Elemente approximiert. Nur Eckpunkte der Kurven U, T, die auch als einzelne herausstechende Spannungswerte U₁, U₂, U₃ bzw. als einzelne herausstechende Temperaturwerte Ť₁, Ť₂, Ť₃ im Kurvenverlauf vorhanden sind, werden noch durch Vertices, die auf Zeitpunkte bezogen werden, dokumentiert. Die rechteckigen Kästchen verdeutlichen, dass nur noch diese Eckpunkte bzw. Vertices gespeichert, übertragen, verwaltet und/oder vorgehalten und berechnet werden müssen, um eine angenäherte Kurve als abgeleitete Temperaturkurve T_{abg} oder als abgeleitete Spannungskurve U_{abg} weiterverarbeiten zu können. Als einzelne Werte der Spannung U oder der Temperatur T werden nur noch zu den Zeitpunkten t^{II}₁, t^{II}₂, t^{II}₃, t^{II}₄ anstelle der ursprünglichen Messwerte zu den Zeitpunkten t^{I}₁, t^{I}₂, t^{I}₃, t^{I}₄, t^{I}₅, t^{I}₆, t^{I}₇, t^{I}₈, t^{I}₉ Daten gespeichert und weiter verarbeitet.

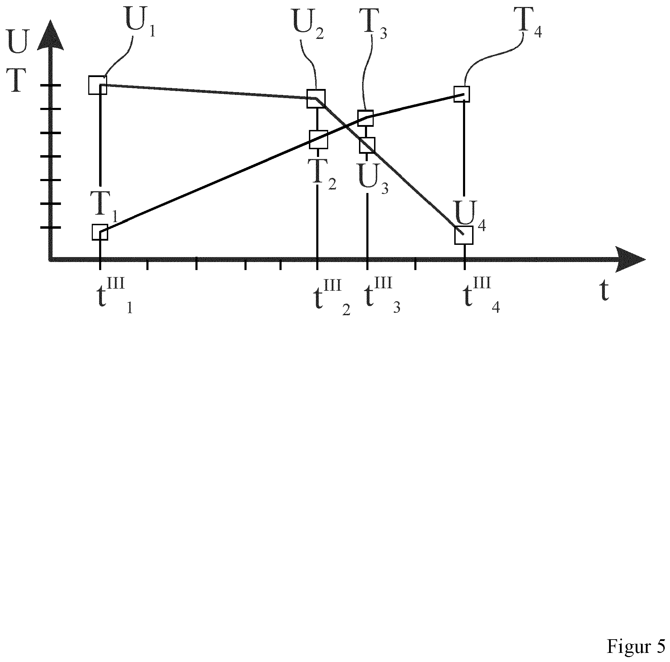

Als weitere Möglichkeit der Vereinfachung des Systems sowie der Komprimierung von Daten kann, wie aus Figur 5 zu entnehmen ist, eine zeitliche Abstimmung zwischen den Vertices im zeitlichen Verlauf t der Spannung U und der Temperatur T vorgenommen werden. Werden die Zeitpunkte, wie die Zeitpunkte t^{III}₁, t^{III}₂, t^{III}₃, t^{III}₄, zu denen Vertices gebildet werden, auf einander zwischen den einzelnen Parametern, wie der Spannung U und der Temperatur T, abgestimmt, so können Tupel gebildet werden, die zu einem Zeitpunkt, wie dem Zeitpunkt t^{III}₁, t^{III}₂, t^{III}₃ oder t^{III}₄, sowohl einen Spannungswert, wie den Spannungswert U₁, U₂, U₃ oder U₄, und einen Temperaturwert, wie den Temperaturwert Ť₁, Ť₂, Ť₃ oder Ť₄, in dem Tupel - insbesondere zu dem nur jeweils einmal gespeicherten Zeitwert eines Zeitpunkts, wie der Zeitpunkte t^{III}₁, t^{III}₂, t^{III}₃, t^{III}₄, - speichern bzw. hinzusetzen. Es findet eine weitere Datenkomprimierung dadurch statt, dass nur noch einmal pro gespeichertem Messpunkt ein Zeitpunkt, wie einer der Zeitpunkte t^{III}₁, t^{III}₂, t^{III}₃, t^{III}₄, archiviert wird. Die Spannung U₁ und die Temperatur Ť₁ bestimmen den Kurvenverlauf der Spannungskurve U und der Temperaturkurve T zum gleichen Zeitpunkt t^{III}₁. Werden die Bezugspunkte bzw. die Zeitpunkte t^{III}1, t^{III}₂, t^{III}₃, t^{III}₄ als Stützstellen für die Bestimmung der Wende-, Extrem- und Verlaufsänderungspunkte (Vertices) angesehen, so reicht es, diese Zeitpunkte t^{III}₁, t^{III}₂, t^{III}₃, t^{III}₄, zwischen denen unterschiedlich lange Perioden bzw. Zeitabstände herrschen oder vorliegen können, zusammen mit den zu diesen Zeitpunkten t^{III}₁, t^{III}₂, t^{III}₃, t^{III}₄ am Messaufnehmer anliegenden Parameter, wie Spannung U₁, U₂, U₃, U₄, oder Temperatur Ť₁, Ť₂, Ť₃, Ť₄, zu speichern.

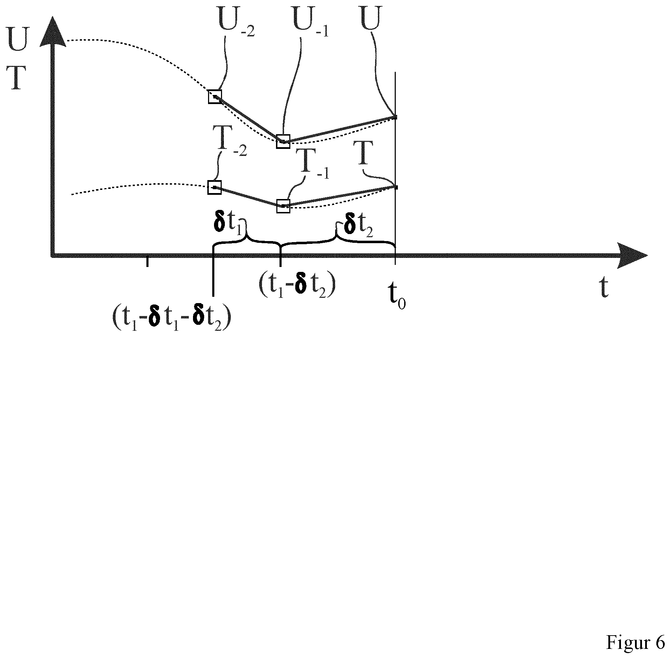

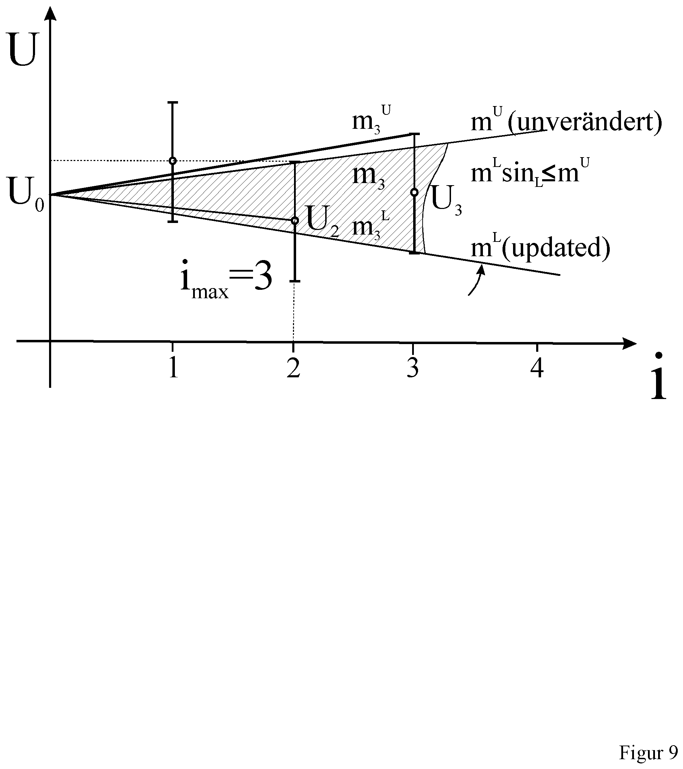

Anhand der Figuren 6 bis 8 lässt sich die Fortschreibung mithilfe des Sekantenalgorithmus schrittweise nachvollziehen. Eine Sekante S^{I}₁, S^{I}₂, S^{I}₃ beschreibt mindestens zwei Messwerte, z. B. einen Ausgangsspannungswert wie den Spannungswert U₀ zum Zeitpunkt t₀ (vgl. auch Figur 9) und z. B. einen ersten gemessenen Spannungswert U₁ zum Zeitpunkt der ersten Stützstelle i = 1. Ein erster Punkt und ein letzter Punkt einer solchen Sekante S^{I}₁, S^{I}₂, S^{I}₃ (somit ein zwischenzeitlich gespeicherter Anfangs- und Endpunkt) entsprechen realen Messwerten wie den Messwerten U₁, U₂, U₃, U^{I}₃ (bezüglich dieser Punkte kann von einem Darstellungsfehler der Größe Null geredet werden). Der Messpunkt m₁ wird durch den Spannungswert U₁ gebildet. Im Rahmen der ersten Messung wird ein Sekantenwert S^{I}₁ zu Beginn durch den aktuellen Messpunkt der Spannung U₁ und den unmittelbar davorliegenden Messpunkt der Spannung U₀ initialisiert. Zu diesem Zeitpunkt beträgt die Anzahl der in der Sekante S^{I}₁ vereinigten Stützstellen iₘₐₓ den Wert 1. Dabei bestimmt die vorgegebene absolute Darstellungsgenauigkeit δ_{Fm}, δ^{I}_{Fm} die Geradensteigungen m^{U} und m^{L} und damit die Grenzen, z. B. eines trichterförmigen Testgebietes (siehe schraffierte Fläche). Im Zusammenhang mit der ersten Messung m₁ sind die obere Geradensteigung m₁^{U} und die untere Geradensteigung m₁^{L} durch absolute Darstellungsgenauigkeit δ_{Fm}, δ^{I}_{Fm} von diesem Messpunkt bzw. der Messung m₁ abgeleitet. Bei späteren, nachfolgenden Messungen bzw. Messpunkten m₂, m₃ werden die Geradensteigungen in Abhängigkeit zu diesen Messpunkten M₂^{U}, m₃^{U}, m₂^{L}, m₃^{L} gebildet.

Generell kann gesagt werden, der jeweilige Messwert wie die Spannung U_{K} zum Messschritt K muss innerhalb des vorgegebenen Fehlers F_{M} liegen, der sich aus den vorgegebenen Teilfehlern δ_{Fm}, δ^{I}_{Fm} zur oberen Geradensteigung m^{U} und zur unteren Geradensteigung m^{L} additiv ergibt. Vereinfachend kann damit operiert werden, dass die Teilfehler δ_{Fm}, δ^{I}_{Fm} identisch weit bzw. groß sind. Es können aber auch unterschiedliche Teilfehler δ_{Fm}, δ^{I}_{Fm} zur oberen Geradensteigung m^{U} und zur unteren Geradensteigung m^{L} festgelegt werden.

Des Weiteren sei darauf hingewiesen, wird durch einen beliebigen Punkt in dem Testgebiet und durch den Anfangspunkt U₀ eine Gerade gezogen, so schneidet diese Gerade den sich aus dem maximalen Fehler F_{M} ergebenden Fehlerbalken, der die Größe δ_{Fm}, δ^{I}_{Fm} um den Endpunkt der Spannung U_{K} (d. h. bei i = 1 U₁, bei i = 2 U₂ usw.) hat. Folglich wird diese Gerade den Punkt U_{K} (je nach Messung also die Punkte U₁, U₂, U₃ usw.) maximal mit dem Fehler δ_{Fm}, δ^{I}_{Fm} (in verkleinernde und in vergrößernde Richtung) beschreiben.

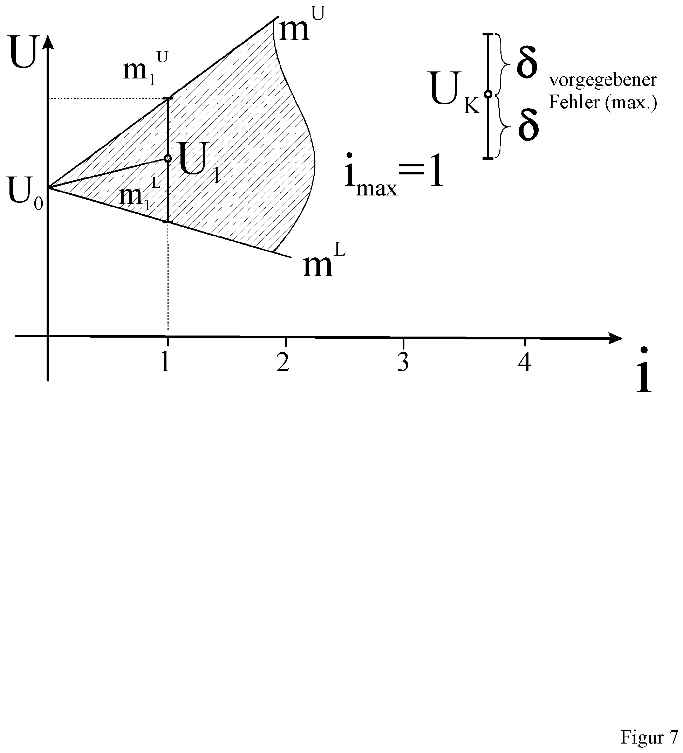

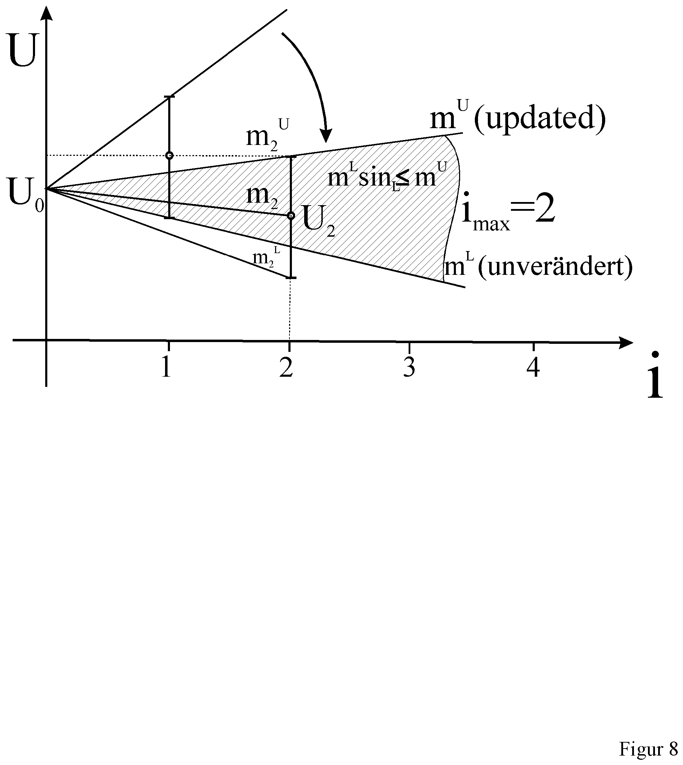

Bei jedem nachfolgenden neuen Messpunkt m₂, m₃ usw. wird geprüft, ob dieser im (sich fortschreibenden) Testbereich liegt (siehe den schraffierten Bereich, insbesondere in den Figuren Figur 7 und Figur 8). Wenn der Messpunkt m₂, m₃ usw. im Testbereich liegt, so darf die Sekante "aktualisiert" werden, indem der bisherige Endpunkt durch den neuen Messpunkt m₂, m₃ usw. ersetzt wird. In diesem Fall werden die Grenzen des Testbereichs (siehe schraffiertes Gebiet) ebenfalls angepasst. Das Testgebiet enthält bei der nächsten Messung m₂, m₃, (generell mᵢ mit i aus dem Zahlenbereich der natürlichen Zahlen) alle Geraden, die vom Anfangspunkt der Sekante aus gezählt alle Punkte, auch den neuen Endpunkt, mit einem maximalen Fehler von δ_{Fm}, δ^{I}_{Fm} beschreiben. Das bedeutet, dass sich der "trichterartige" Testbereich mit jedem Messwert m₂, m₃ usw. (mᵢ) weiter verengen wird. Im extremen, sogar wunschgemäß angestrebten Fall sehr langer Sekanten konvergieren m_{U} und m_{L} immer weiter aufeinander zu. Der Grenzwert ist dabei eine mittlere Geradensteigung durch eine Punktewolke aus den dazwischen liegenden Messwerten (zwischen dem ersten und dem letzten Messwert der Sekante).

Anhand der Figuren Figur 7 und Figur 8 ist zu sehen, dass die obere Geradensteigung m^{U} und die untere Geradensteigung m^{L} in Abhängigkeit der Fortschreibung des Sekanteneckpunktes durch den gemessenen Wert wie der Spannung U₂, U₃ als unveränderte Gerade 80, 80^{I} oder als aktualisierte Gerade 90, 90^{I} zu einer Testgebietsanpassung 95, 95^{I} führt.

Liegt der neue Messpunkt wie der Spannungswert U^{I}₃ außerhalb des Testgebietes, so gilt die Sekante S^{I}₃ als beendet. Im nächsten Schritt wird eine neue Sekante S^{II}₁ begonnen. Das bedeutet, dass der vorige Messwert m₃ und Endpunkt der bisherigen Sekante S^{I}₃ zum Anfangspunkt der neuen Sekante S^{II}₁ wird (siehe Figur 8). Der Endpunkt der "alten" Sekante S^{I}₃ wird mit dem aktuellen Messwert initialisiert. Die neue Sekante S^{II}₁ startet also auch damit, dass sie genau zwei Messwerte (vgl. U₀ und U₁ in Figur 6) enthält.

Der zuvor beschriebene Ablauf und die zuvor beschriebene Sekantenbildung wird für die nächste Sekante erneut durchlaufen.

Die Sekantenbildung, der Sekantenalgorithmus und die Fortschreibung der Kurvenapproximation sind schwerpunktmäßig anhand von Spannungswerten und anhand von Temperaturwerten beschrieben worden. Es ist aber auch möglich, andere elektronische, elektrische und/oder elektrochemische Parameter wie z. B. Strom, Widerstand, Ladung und Konzentration, insbesondere eines elektrochemischen Konverters, gleichartig zu behandeln.

Die Figuren 2 bis 8 stellen vorrangig die Kurvenberechnung, insbesondere die Sekantenbildung der Sekanten T₁^{I}, T₂^{I}, T₃^{I}, S₁, S₂, S^{I}₁, S^{I}₂, S^{I}₃, S^{II}₁, vor, die insbesondere von den Messaufnehmern 7, 7^{I}, 7^{II}, 7^{III}, 7^{IV} (siehe Figur 1) umgesetzt werden.

Das "Zurückrechnen", die Herleitung der approximierten Kurve findet im Empfänger 5 statt, der vorzugsweise von einem Zeitpunkt t₀ aus (aktueller Zeitpunkt) in die Vergangenheit den Kurvenverlauf extrahiert bzw. extrapoliert.

Wie gesagt, die Stützstellen t₀, t₀ - δt₁ - δt₂, t₀ - δt₁ sind in der Domäne Zeit t unterschiedlich verteilt. Sie hängen von den Vertices der Parameter wie der Spannung U und der Temperatur T ab. Die Spannungswerte U₀, U₋₁, U₋₂ und die Temperaturwerte T₀, T₋₁, T₋₂ werden anhand der Sekanten wie den zu den Figuren 2 bis 8 erläuterten Sekanten T₁^{I}, T₂^{I}, T₃^{I}, S₁, S₂, S^{I}₁, S^{I}₂, S^{I}₃, S^{II}₁ rückwärts in die Vergangenheit, d. h. mit ansteigendem Alter wieder hergeleitet.

In Figur 9 wird ein "Kurzzeit-Log" ("Typ 1") gezeigt. Jeder der Parameter U, T wird anhand einer eigenen Sekante mit den Stützstellen U₀, U₋₁, U₋₂ bzw. T₀, T₋₁, T₋₂ ermittelt. Die Zeitpunkte t₀, t₀ - δt₁ - δt₂, t₀ - δt₁ als Stützstellen der beiden Sekanten werden aber gemeinsam, d. h. einheitlich festgehalten. Zum Beispiel gibt es zu dem Zeitpunkt t₀ - δt₁ den Spannungswert U₋₁ und den Temperaturwert T₋₁ als Sekanteneckpunkte.

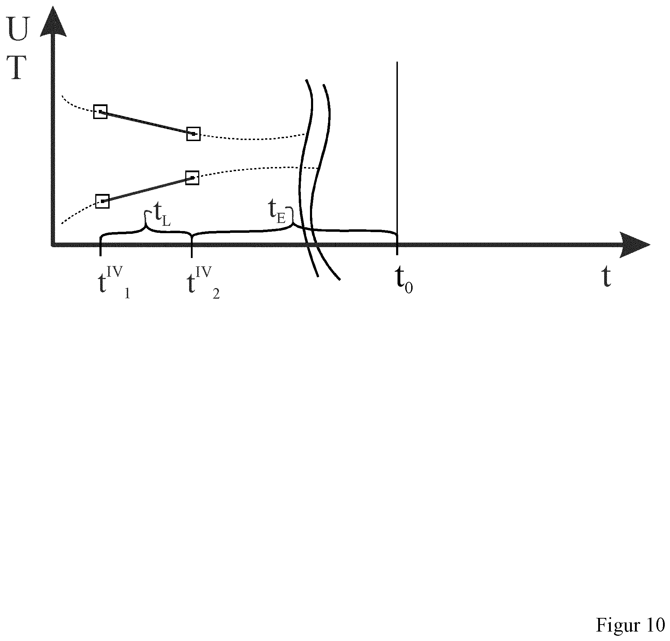

Figur 10 zeigt einen "Lanzeit-Log" ("Typ 2"). Beim "Langzeit-Log" wird vorzugsweise nur mit einer Sekante für alle vom Empfänger behandelten Parameter, wie der Spannung U und der Temperatur T, gearbeitet. Auch sind die Stützstellen t^{IV}₁, t^{IV}₂ nur einmal für alle Kurven vorhanden. Die Zeitspannen t_{L}, t_{E} können bis zu 65535 Messintervalle umfassen. Um diese Mess- und Datenlage besser zu verdeutlichen, ist die sehr lange, z. B. Tage andauernde Spanne t_{E}, als gebrochene Kurve dargestellt. Es wird in der Domäne der Zeit t von dem aktuellen Zeitpunkt t₀ sozusagen rückwärtsgerichtet, also in die Vergangenheit blickend, der Kurvenverlauf anhand von stückweise sich zusammensetzenden Geraden als Kurvenersatz approximiert.

### Bezugszeichenliste

| **Bezugszeichen** | **Bedeutung** |
|---|---|
| 1 | Energieversorgungseinrichtung |
| 2, 2^{I} | Energieleitungsanschluss |
| 3, 3^{I}, 3^{II}, 3^{III}, 3^{IV} | Energiespeicherpaket, insbesondere Blei-Akkumulator |
| 4 | Überwachungselektronik bzw. Messdatensammler |
| 5 | Empfänger |
| 6 | Messsystem |
| 7, 7^{I}, 7^{II}, 7^{III}, 7^{IV} | Messaufnehmer bzw. Messsensor |
| 8, 8^{I}, 8^{II}, 8^{III}, 8^{IV} | Mikrokontroller, insbesondere mit einer Mikroprozessoreinheit |
| 9, 9^{I}, 9^{II}, 9^{III}, 9^{IV}, 9^{V}, 9^{VI}, 9^{VII},9^{VIII}, 9^{IX} | Messeinrichtung |
| 10, 10^{I}, 10^{II}, 10^{III}, 10^{IV} | Sender |
| 11, 11^{I}, 11", 11^{III}, 11^{IV} | Anschluss |
| 12, 12', 12", 12^{III}, 12^{IV} | Messpunkt |
| 15, 15^{I} | Leitungen, insbesondere Energieleitungen |
| 16, 16', 16^{II}, 16^{III}, 16^{IV} | Modulator |
| 17 | Demodulator, insbesondere in einem Mikrokontroller |
| 22 | Last, insbesondere Ohm'sche und induktive Last |
| 23 | Batterieüberwachung |
| 26, 26', 26", 26^{III}, 26^{IV}, 26^{V}, 26^{VI}, 26^{VII}, 26^{VIII}, 26^{IX} | Energieanschluss |
| 28 | erster Kommunikationskanal |
| 30 | zweiter Kommunikationskanal |
| 32 | dritter Kommunikationskanal |
| 34, 34^{I} | Pol, insbesondere eines Akkumulators |
| 36 | Lichtemitter, insbesondere LED |
| 38 | Empfänger, insbesondere für Lichtsignale |
| 40 | Übertragung |
| 50 | Batterieüberwachungseinrichtung |
| 80, 80^{I} | unveränderte Gerade |
| 90, 90^{I} | aktualisierte Gerade |
| 95, 95^{I} | Testgebietsanpassung |
| K | Messschritt |
| M₁, M₁^{I}, M₁^{II}, M₂, M₃ | Messpunkt |
| T₁, T₂, T₃ | Sekante bzw. Sekantenabschnitt |
| T₁^{I}, T₂^{I}, T₃^{I} | Sekante bzw. Sekantenabschnitt |
| T_{abg}. | abgeleitete Kurve |
| U | Spannung |
| U₁, U₂, U₃, U^{I}₃, U₄ | Spannungswerte |
| U₀, U₋₁, U₋₂ | Spannungswerte, insbesondere zu vorangegangenen Zeitpunkten |
| U | Spannungskurve |
| U_{abg}. | abgeleitete Kurve |
| Uₖ | Spannung bzw. Spannungswert zum Messschritt K |
| T | Temperatur |
| T | Temperaturkurve |
| Ť₁, Ť₂, Ť₃, Ť₄ | Temperaturwert, insbesondere zu einzelnen Zeitpunkten |
| T₀, T₋₁, T₋₂ | Temperaturwerte, insbesondere zu vorangegangenen Zeitpunkten |
| t | Zeit |
| t₁, t₂ | Zeitperiode |
| t₀, t₁, t₂, t₃, t₄, t₅, t₆, t₇, t₁I, t₂^{I}, t₃^{I}, t₄^{I}, t₅^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}, t₁^{IV}, t₂^{IV} | Zeitpunkt |
| δt₁, δt₂ | Zeitspanne, insbesondere Kurzzeitzeitspanne |
| t_{L} | Zeitspanne, insbesondere Langzeitzeitspanne |
| t_{E} | Zeitspanne, insbesondere Langzeitzeitspanne |
| S₁, S₂, S^{I}₁, S^{I}₂, S^{I}₃, S^{II}₁ | Sekante, insbesondere im Messaufnehmer (rechnerisch) verwendete Sekante |
| i | Stützstelle, insbesondere unabhängig von der Zeit, vorzugsweise als abstrakt bestimmter Messpunkt |
| iₘₐₓ | Anzahl zusammengefasster bzw. übersprungener Stützstellen |
| m^{U} | obere Geradensteigung |
| m^{L} | untere Geradensteigung |
| m₁^{U}, m₂^{U}, m₃^{U} | obere Geradensteigung, bezogen auf einen konkreten Messpunkt |
| m₁^{L}, m₂^{L}, m₃^{L} | untere Geradensteigung, bezogen auf einen konkreten |
| | Messpunkt |
| m₁, m₂, m₃ | Messpunkt, insbesondere in einen Messaufnehmer eingelesenen Messpunkt |
| mᵢ | i-te Messung bzw. i-ter Messpunkt |
| δ_{Fm}, δ^{I}_{Fm} | vorgegebener Fehler bzw. Darstellungsgenauigkeit |
| F_{M} | vorgegebener Fehler, insbesondere vorgegebener maximaler Fehler, vorzugsweise Fehlerintervall |

## Patentansprüche

1. Verteiltes Messsystem (6),
mit wenigstens zwei Messsensoren (7, 7^{I}, 7^{II}, 7^{III}, 7^{IV}) zur Messung von jeweils wenigstens zwei Parametern (U, T) eines Akkumulators (3, 3^{I}, 3^{II}, 3^{III}, 3^{IV}) und
mit einem, über Energieversorgungsleitungen (15, 15^{I}) angeschlossenen Messdatensammler (4),
wobei zwischen den Messsensoren (7, 7^{I}, 7^{II}, 7^{III}, 7^{IV}) und dem Messdatensammler (4) ein kabelgebundener Datenbus existiert,
wobei Messdaten über den Datenbus von wenigstens einem der Messsensoren (7, 7^{I}, 7^{II}, 7^{III}, 7^{IV}) zu dem Messdatensammler (4) übertragen werden,
**dadurch gekennzeichnet, dass**
wenigstens einer der Messsensoren (7, 7^{I}, 7^{II}, 7^{III}, 7^{IV}) dazu eingerichtet ist,
wenigstens zwei unterschiedliche Messdatensätze, ein erster Messdatensatz und ein zweiter Messdatensatz, zu unterschiedlichen Zeitpunkten über den Datenbus zu übertragen, in die ein ermittelter Messpunkt (M₁^{I}) als ein Wert für einen Sekantenwert (T₁^{I}) mit von Messdatensatz zu Messdatensatz zueinander abweichenden zeitlichen Längen eingeht.

2. Verteiltes Messsystem (6) nach Anspruch 1,
**dadurch gekennzeichnet, dass**
neben dem Datenbus als einem ersten Kommunikationskanal (28) ein zweiter Kommunikationskanal (30) für einen Verbindungsaufbau zu dem Messdatensammler (4) vorhanden ist.

3. Verteiltes Messsystem (6) nach Anspruch 2,
**dadurch gekennzeichnet, dass**
eine Übertragung (40) über den Kommunikationskanal (28, 30) mittels eines amplitudenmodulierten Rechtecksignals erfolgt,
wobei die Übertragung (40) über mehr als eine Trägerfrequenz erfolgt.

4. Verteiltes Messsystem (6) nach Anspruch 3,
**dadurch gekennzeichnet, dass**
Daten von Messsensoren (7, 7^{I}, 7^{II}, 7^{III}, 7^{IV}) gemessen und durch Berechnungen von Mikrokontrollern (8, 8^{I}, 8^{II}, 8^{III}, 8^{IV}) in den Messsensoren (7, 7^{I}, 7^{II}, 7^{III}, 7^{IV}) aufbereitet als Messdatensätze mittels eines Trägerfrequenzwechsels zwischen Typen von Messdatensätzen über eine Kette aus Modulator (16, 16', 16", 16^{III}, 16^{IV}) und Demodulator (17) übertragbar sind.

5. Verteiltes Messsystem (6) nach einem der Ansprüche 2 bis 4,
**dadurch gekennzeichnet, dass**
als mindestens ein weiterer Kommunikationskanal (32) das verteilte Messsystem (6) einen auf Lichtleitungen und/oder auf elektromagnetischen Wellen basierenden, optischen Übertragungsweg hat, der mithilfe von Lichtemittern (36) und Empfängern (38) gebildet ist.

6. Verteiltes Messsystem (6) nach einem der vorhergehenden Ansprüche,
**dadurch gekennzeichnet, dass**
Messdatensätze über einen Kommunikationskanal (28, 30, 32) übertragbar sind,
wobei ein Messdatensatz eine mehrparametrige Datenmenge darstellt,
die zumindest einen Spannungswert (U₁, U₂, U₃, U^{I}₃, U₄) eines Spannungswertpolygonzugs und zumindest einen Temperaturwert (Ť₁, Ť₂, Ť₃, Ť₄, T₀, T₋₁, T₋₂) eines Temperaturwertpolygonzugs umfasst.

7. Verteiltes Messsystem (6) nach einem der vorhergehenden Ansprüche,
**dadurch gekennzeichnet, dass**
einer der Messsensoren (7, 7^{I}, 7^{II}, 7^{III}, 7^{IV}) ein einzelner Messaufnehmer ist, der auf oder in einem dem Messsensor (7, 7^{I}, 7^{II}, 7^{III}, 7^{IV}) zugeordneten Akkumulator (3, 3^{I}, 3^{II}, 3^{III}, 3^{IV}) angeordnet ist oder zusammen mit einem der Akkumulatoren (3, 3^{I}, 3", 3^{III}, 3^{IV}) eine kompakte, zu einem Gerät integrierte Baueinheit ist, somit einem bestimmten Akkumulator (3, 3^{I}, 3^{II}, 3^{III}, 3^{IV}) zugeordnet und für dessen Messwerte verantwortlich ist.

8. Verteiltes Messsystem (6) nach einem der vorhergehenden Ansprüche,
**dadurch gekennzeichnet, dass**
in dem Messsensor (7, 7', 7^{II}, 7^{III}, 7^{IV}) ein Sekantenalgorithmus implementiert ist,
wobei der Messsensor (7, 7', 7", 7^{III}, 7^{IV}) eine autark laufende Steuerung zur Übertragung von seinen Messdaten, die aus mehreren Einzelmessungen abgeleitet sind, hat,
und der Messsensor (7, 7^{I}, 7^{II}, 7^{III}, 7^{IV}) als Stromsensor für einen ganzen Batteriestrang oder
als Temperatursensor für eine Raumtemperatur außerhalb eines Batterieschranks oder für eine Temperatur (T) des dem Messsensor (7, 7^{I}, 7^{II}, 7^{III}, 7^{IV}) zugeordneten Akkumulators (3, 3^{I}, 3^{II}, 3^{III}, 3^{IV}) ausgestattet ist.

9. Verteiltes Messsystem (6) nach einem der Ansprüche 2 bis 8,
**dadurch gekennzeichnet, dass**
der Messdatensammler (4) für eine Überführung einer realen Messkurve (U, T), die zwei, über eine Zeit (t) veränderliche Parameter (U, T) umfasst, nach deren Übertragung (40) über zumindest einen der Kommunikationskanäle (28, 30, 32) zu dem Messdatensammler (4) in eine approximierte, abgeleitete Kurve (T_{abg}.) gestaltet ist.

10. Verteiltes Messsystem (6) nach einem der vorhergehenden Ansprüche,
**dadurch gekennzeichnet, dass**
über den kabelgebundenen Datenbus und über die Energieversorgungsleitungen (15, 15^{I}) gleiche Daten, jeweils in einem anderen elektrischen Protokoll, übertragbar sind.

11. Messsteuerung zur Übertragung von wenigstens zwei Sensorwerten, zur Benutzung in einem verteilten Messsystem (6) nach einem der vorhergehenden Ansprüche und
wobei die Messsteuerung wenigstens einen Messsensor (7, 7^{I}, 7^{II}, 7^{III}, 7^{IV}) umfasst,
der eine autark laufende Steuerung zur Übertragung der Sensorwerte hat,
und zwischen dem wenigstens einen Messsensor (7, 7', 7", 7^{III}, 7^{IV}) und einem Messdatensammler (4) ein kabelgebundener Datenbus existiert,
wobei die Sensorwerte unterschiedliche physikalische Parameter (U, T) eines mehrere Zellen umfassenden Akkumulators (3, 3^{I}, 3^{II}, 3^{III}, 3^{IV}) zu einem ersten Zeitpunkt und zu einem zweiten Zeitpunkt darstellen,
unterdessen physikalische Parameter eines zweiten Akkumulators (3, 3^{I}, 3", 3^{III}, 3^{IV}) übertragen werden,
wobei alle diese Parameter an den über ein Energieversorgungskabel angeschlossenen Messdatensammler (4) übermittelt werden,
**dadurch gekennzeichnet, dass**
die Parameter (U, T) als Teil eines Polygonzugs,
der ein durch Sekanten approximierender Polygonzug ist,
über den Datenbus von dem wenigstens einen der Messsensoren (7, 7^{I}, 7^{II}, 7^{III}, 7^{IV}) zu dem Messdatensammler (4) übertragen werden.

12. Messsteuerung nach Anspruch 11,
**dadurch gekennzeichnet, dass**
einem Parameter (U, T) zugeordnete Sekanten (S₁, S₂, S^{I}₁, S^{I}₂, S^{I}₃, S^{II}₁), die mithilfe eines Sekantenalgorithmus, der in den Messsensoren (7, 7^{I}, 7^{II}, 7^{III}, 7^{IV}) ausgeführt wird, aus Messkurven approximiert werden, einen Polygonzug ergeben,
der einen zeitlichen Verlauf mindestens eines der Parameter (U, T) in approximierter Form wiedergibt,
wobei wenigstens zwei unterschiedliche Parameter (U, T) durch Sekanten (S₁, S₂, S^{I}1, S^{I}₂, S^{I}₃, S^{II}₁) auf Basis eines Satzes Stützstellen (i, t₁^{I}, t₂^{I}, t₃^{I}, t₄^{I}, t₅^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}) festgelegt sind.

13. Messsteuerung nach einem der vorhergehenden Ansprüche 11 oder 12,
**dadurch gekennzeichnet, dass**
die Übertragung an den Messdatensammler (4) zwei unterschiedliche Typen an Messdatensätzen umfasst.

14. Messsteuerung nach einem der vorhergehenden Ansprüche 11 bis 13,
**dadurch gekennzeichnet, dass**
jede Sekante (S₁, S₂, S^{I}₁, S^{I}₂, S^{I}₃, S^{II}₁)
durch eine Mindesthäufigkeit eines Auftretens von Zeitpunkten (t₀, t₁, t₂, t₃, t₄, t₅, t₆, t₇, t₁^{I}, t₂^{I}, t₃^{I}, t₄^{I}, t₅^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}), zu denen je ein Vertex einen Anfang und/oder ein Ende einer Sekante (S₁, S₂, S^{I}₁, S^{I}₂, S^{I}₃, S^{II}₁) bestimmt und/oder
durch Einhaltung eines maximalen absoluten Fehlers (F_{M}) aufgrund einer Wiedergabe des Verlaufs durch eine Sekante (S₁, S₂, S^{I}₁, S^{I}₂, S^{I}₃, S^{II}₁) anstelle einer Parameterkurve, wobei der Fehler durch gemessene Parameter von einer Messung zu einer nächsten Messung angepasst wird,
unter einer maximalen Länge bleibt.

15. Verfahren zur Messdatenübertragung,
das auf einem verteilten elektronischen Messsystem (6), insbesondere einem Messsystem (6) gemäß einem der Ansprüche 1 bis 10, ausführbar ist,
wobei einzelne Messsensoren (7, 7^{I}, 7^{II}, 7^{III}, 7^{IV}) jeweils elektrochemischen Wandlern zugewiesen sind,
wobei ein Teil einer Messsteuerung, insbesondere einer Messsteuerung gemäß einem der Ansprüche 11 bis 14, für eine Messung von Parametern (U, T) des elektrochemischen Wandlers sorgt,
wobei von einem der Messsensoren (7, 7^{I}, 7^{II}, 7^{III}, 7^{IV}) als Messwerte aufgenommene Parameter (U, T) über mehrere Kommunikationskanäle von dem Messsensor (7, 7', 7^{II}, 7^{III}, 7^{IV}) zu dem entfernt angeordneten Messdatensammler (4) übertragen werden, wobei zwischen den Messsensoren (7, 7^{I}, 7^{II}, 7^{III}, 7^{IV}) und dem Messdatensammler (4) ein kabelgebundener Kommunikationsbus existiert, der einen der Kommunikationskanäle (28, 30, 32) bildet,
**dadurch gekennzeichnet, dass**
wenigstens zwei unterschiedliche Messdatensätze, ein erster Messdatensatz und ein zweiter Messdatensatz, zu unterschiedlichen Zeitpunkten über den kabelgebundenen Kommunikationsbus durch einen der Messsensoren (7, 7^{I}, 7^{II}, 7^{III}, 7^{IV}) übertragen werden,
in die ein ermittelter Messpunkt (M₁^{I}) als ein Wert für einen Sekantenwert (T₁^{I}) mit von Messdatensatz zu Messdatensatz zueinander abweichenden zeitlichen Längen eingeht.

## Claims

1. Distributed measurement system (6),
comprising at least two measurement sensors (7, 7^{I}, 7", 7^{III}, 7^{IV}) for measuring in each case at least two parameters (U, T) of a battery (3, 3^{I}, 3^{II}, 3^{III}, 3^{IV}), and
comprising a measured data collector (4), which is connected via power supply lines (15, 15^{I}),
wherein there is a wired data bus between the measurement sensors (7, 7^{I}, 7^{II}, 7^{III}, 7^{IV}) and the measured data collector (4),
wherein measured data is transmitted via the data bus from at least one of the measurement sensors (7, 7^{I}, 7^{II}, 7^{III}, 7^{IV}) to the measured data collector (4),
**characterized in that**
at least one of the measurement sensors (7, 7^{I}, 7^{II}, 7^{III}, 7^{IV}) is designed
to transmit at least two different measured data sets, a first measured data set and a second measured data set, at different points in time via the data bus, which measured data sets include a determined measurement point (M₁^{I}) as a value for a secant value (T₁^{I}) with temporal lengths that differ from measured data set to measured data set.

2. Distributed measurement system (6) according to claim 1,
**characterized in that**
in addition to the data bus as a first communication channel (28), there is a second communication channel (30) for establishing a connection to the measured data collector (4).

3. Distributed measurement system (6) according to claim 2,
**characterized in that**
a transmission (40) via the communication channel (28, 30) takes place by means of an amplitude-modulated square-wave signal,
wherein the transmission (40) takes place over more than one carrier frequency.

4. Distributed measurement system (6) according to claim 3,
**characterized in that**
data from measurement sensors (7, 7^{I}, 7^{II}, 7^{III}, 7^{IV}) is measured and, processed by way of calculations by microcontrollers (8, 8^{I}, 8^{II}, 8^{III}, 8^{IV}) in the measurement sensors (7, 7^{I}, 7^{II}, 7^{III}, 7^{IV}), can be transmitted in the form of measured data sets via a chain formed of a modulator (16, 16^{I}, 16^{II}, 16^{III}, 16^{IV}) and a demodulator (17) by means of a carrier frequency change between types of measured data sets.

5. Distributed measurement system (6) according to any one of claims 2 to 4,
**characterized in that**
the distributed measurement system (6) has, as at least one further communication channel (32), an optical transmission path based on light guides and/or electromagnetic waves, which is formed by light emitters (36) and receivers (38).

6. Distributed measurement system (6) according to any one of the preceding claims,
**characterized in that**
measured data sets can be transmitted via a communication channel (28, 30, 32),
wherein a measured data set represents a multi-parameter set of data,
which comprises at least one voltage value (U₁, U₂, U₃, U^{I}₃, U₄) of a voltage value polygonal chain and at least one temperature value (Ť₁, Ť₂, Ť₃, Ť₄, T₀, T₋₁, T₋₂) of a temperature value polygonal chain.

7. Distributed measurement system (6) according to any one of the preceding claims, **characterized in that**
one of the measurement sensors (7, 7^{I}, 7^{II}, 7^{III}, 7^{IV}) is an individual measurement sensor, which is arranged on or in a battery (3, 3^{I}, 3^{II}, 3^{III}, 3^{IV}) assigned to the measurement sensor (7, 7^{I}, 7^{II}, 7^{III}, 7^{IV}) or forms together with one of the batteries (3, 3^{I}, 3", 3^{III}, 3^{IV}) a compact structural unit integrated as one device, thus is assigned to a particular battery (3, 3^{I}, 3", 3^{III}, 3^{IV}) and is responsible for the measured values thereof.

8. Distributed measurement system (6) according to any one of the preceding claims, **characterized in that**
a secant algorithm is implemented in the measurement sensor (7, 7^{I}, 7^{II}, 7^{III}, 7^{IV}),
wherein the measurement sensor (7, 7^{I}, 7^{II}, 7^{III}, 7^{IV}) has an autonomous control system for transmitting its measured data, said data being derived from multiple individual measurements, and the measurement sensor (7, 7^{I}, 7^{II}, 7^{III}, 7^{IV}) is equipped as a current sensor for an entire battery string, or
as a temperature sensor for a room temperature outside a battery cabinet or for a temperature (T) of the battery (3, 3^{I}, 3", 3^{III}, 3^{IV}) assigned to the measurement sensor (7, 7^{I}, 7^{II}, 7^{III}, 7^{IV}).

9. Distributed measurement system (6) according to any one of claims 2 to 8,
**characterized in that**
the measured data collector (4) is designed to convert a real measurement curve (U, T), which comprises two parameters (U, T) that can vary over a time (t), following transmission (40) thereof to the measured data collector (4) via at least one of the communication channels (28, 30, 32), into an approximated, derived curve (T_{abg.}).

10. Distributed measurement system (6) according to any one of the preceding claims,
**characterized in that**
the same data, in each case in a different electric protocol, can be transmitted via the wired data bus and via the power supply lines (15, 15^{I}).

11. Measurement control system for transmitting at least two sensor values, for use in a distributed measurement system (6) according to any one of the preceding claims,
wherein the measurement control system comprises at least one measurement sensor (7, 7^{I}, 7^{II}, 7^{III}, 7^{IV}),
which has an independent control system for transmitting the sensor values,
and there is a wired data bus between the at least one measurement sensor (7, 7^{I}, 7^{II}, 7^{III}, 7^{IV}) and a measured data collector (4),
wherein the sensor values represent different physical parameters (U, T) of a multi-cell battery (3, 3^{I}, 3", 3^{III}, 3^{IV}) at a first point in time and at a second point in time, as meanwhile physical parameters of a second battery (3, 3^{I}, 3^{II}, 3^{III}, 3^{IV}) are transmitted, wherein all these parameters are transmitted to the measured data collector (4), which is connected via a power supply cable,
**characterized in that**
the parameters (U, T) are transmitted as part of a polygonal chain,
which is a polygonal chain being an approximation by secants,
from the at least one of the measurement sensors (7, 7^{I}, 7^{II}, 7^{III}, 7^{IV}) to the measured data collector (4) via the data bus.

12. Measurement control system according to claim 11,
**characterized in that**
secants (S₁, S₂, S^{I}₁, S^{I}₂, S^{I}₃, S^{II}₁) assigned to a parameter (U, T), which are approximated from measurement curves using a secant algorithm implemented in the measurement sensors (7, 7^{I}, 7^{II}, 7^{III}, 7^{IV}), yield a polygonal chain,
which renders a curve over time of at least one of the parameters (U, T) in approximated form,
wherein at least two different parameters (U, T) are defined by secants (S₁, S₂, S^{I}1, S^{I}₂, S^{I}₃, S^{II}₁) on the basis of a set of support points (i, t₁^{I}, t₂^{I}, t₃^{I}, t₄^{I}, t₅^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}).

13. Measurement control system according to any one of the preceding claims 11 or 12, **characterized in that**
the transmission to the measured data collector (4) comprises two different types of measured data sets.

14. Measurement control system according to any one of the preceding claims 11 to 13, **characterized in that**
each secant (S₁, S₂, S^{I}₄, S^{I}₂, S^{I}₃, S^{II}₁) remains below a maximum length
due to a minimum frequency of occurrence of points in time (t₀, t₁, t₂, t₃, t₄, t₅, t₆, t₇, t₁^{I}, t₂^{I}, t₃^{I}, t₄^{I}, t₅^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}) at which a respective vertex defines a start and/or an end of a secant (S₁, S₂, S^{I}₁, S^{I}₂, S^{I}₃, S^{II}₁), and/or
due to adhering to a maximum absolute error (F_{M}) based on a rendering of the curve by a secant (S₁, S₂, S^{I}₁, S^{I}₂, S^{I}₃, S^{II}₁) instead of a parameter curve,
wherein the error is adjusted by measured parameters from one measurement to a next measurement.

15. Method for transmitting measured data,
which can be carried out on a distributed electronic measurement system (6), in particular a measurement system (6) according to any one of claims 1 to 10,
wherein individual measurement sensors (7, 7^{I}, 7^{II}, 7^{III}, 7^{IV}) are assigned to respective electrochemical converters,
wherein one part of a measurement control system, in particular a measurement control system according to any one of claims 11 to 14, ensures measurement of parameters (U, T) of the electrochemical converter,
wherein parameters (U, T) recorded as measured values by one of the measurement sensors (7, 7^{I}, 7^{II}, 7^{III}, 7^{IV}) are transmitted from the measurement sensor (7, 7^{I}, 7^{II}, 7^{III}, 7^{IV}) to the remote measured data collector (4) via multiple communication channels,
wherein between the measurement sensors (7, 7^{I}, 7^{II}, 7^{III}, 7^{IV}) and the measured data collector (4) there is a wired communication bus, which forms one of the communication channels (28, 30, 32),
**characterized in that**
at least two different measured data sets, a first measured data set and a second measured data set, are transmitted by one of the measurement sensors (7, 7^{I}, 7^{II}, 7^{III}, 7^{IV}) at different points in time via the wired communication bus,
which measured data sets include a determined measurement point (M₁^{I}) as a value for a secant value (T₁^{I}) with temporal lengths that differ from measured data set to measured data set.

## Revendications

1. Système de mesure (6) distribué,
avec au moins deux capteurs de mesure (7, 7^{I}, 7^{II}, 7^{III}, 7^{IV}) pour la mesure de respectivement au moins deux paramètres (U, T) d'un accumulateur (3, 3^{I}, 3^{II}, 3^{III}, 3^{IV}) et
avec un collecteur de données mesurées (4) raccordé via des conduits d'alimentation en énergie (15, 15^{I}),
dans lequel un bus de données existe entre les capteurs de mesure (7, 7^{II}, 7^{II}, 7^{III}, 7^{IV}) et le collecteur de données mesurées (4),
dans lequel des données mesurées sont transmises via le bus de données depuis au moins l'un des capteurs de mesure (7, 7^{I}, 7^{II}, 7^{III}, 7^{IV}) vers le collecteur de données mesurées (4),
**caractérisé en ce que**
au moins l'un des capteurs de mesure (7, 7^{I}, 7^{II}, 7^{III}, 7^{IV}) est aménagé pour
transmettre au moins deux ensembles de données mesurées différents, un premier ensemble de données mesurées et un second ensemble de données mesurées, à des instants différents via le bus de données, dans lesquels un point mesuré (M₁^{I}) est saisi en tant que valeur pour une valeur de sécante (T₁^{I}) avec des longueurs temporelles différant les unes des autres d'un ensemble de données mesurées à l'autre.

2. Système de mesure (6) distribué selon la revendication 1,
**caractérisé en ce que**
à côté du bus de données en tant que premier canal de communication (28), un deuxième canal de communication (30) est présent pour un établissement de liaison avec le collecteur de données mesurées (4).

3. Système de mesure (6) distribué selon la revendication 2,
**caractérisé en ce que**
une transmission (40) a lieu via le canal de communication (28, 30) au moyen d'un signal rectangulaire modulé en amplitude,
dans lequel la transmission (40) a lieu via plus d'une fréquence porteuse.

4. Système de mesure (6) distribué selon la revendication 3,
**caractérisé en ce que**
des données mesurées par des capteurs de mesure (7, 7^{I}, 7^{II}, 7^{III}, 7^{IV}) et préparées par des calculs par des microcontrôleurs (8, 8^{I}, 8^{II}, 8^{III}, 8^{IV}) dans les capteurs de mesure (7, 7^{I}, 7^{II}, 7^{III}, 7^{IV}) peuvent être transmises en tant qu'ensembles de données mesurées, au moyen d'un changement de fréquence porteuse entre des types d'ensembles de données mesurées, via une chaîne constituée par un modulateur (16, 16^{I}, 16^{II}, 16^{III}, 16^{IV}) et un démodulateur (17).

5. Système de mesure (6) distribué selon l'une des revendications 2 à 4,
**caractérisé en ce que**
en tant qu'au moins un autre canal de communication (32), le système de mesure (6) distribué présente un chemin de transmission optique basé sur des conduits de lumière et/ou sur des ondes électromagnétiques, qui est formé à l'aide d'émetteurs de lumière (36) et de récepteurs (38).

6. Système de mesure (6) distribué selon l'une des revendications précédentes,
**caractérisé en ce que**
des ensembles de données mesurées peuvent être transmises via un canal de communication (28, 30, 32),
dans lequel un ensemble de données mesurées représente une quantité de données multiparamétrique,
qui comprend au moins une valeur de tension (U₁, U₂, U₃, U^{I}₃, U₄) d'un tracé polygonal de valeur de tension et au moins une valeur de température (*Ť*₁, *Ť*₂, *Ť*₃, *Ť*₄, T₀, T₋₁, T₋₂) d'un tracé polygonal de valeur de température.

7. Système de mesure (6) distribué selon l'une des revendications précédentes,
**caractérisé en ce que**
l'un des capteurs de mesure (7, 7^{I}, 7^{II}, 7^{III}, 7^{IV}) est un détecteur de mesure individuel qui est agencé sur ou dans un accumulateur (3, 3^{I}, 3^{II}, 3^{III}, 3^{IV}) attribué au capteur de mesure (7, 7^{I}, 7^{II}, 7^{III}, 7^{IV}) ou est, ensemble avec l'un des accumulateurs (3, 3^{I}, 3^{II}, 3^{III}, 3^{IV}), un assemblage compact et intégré à un appareil, qui est ainsi attribué à un accumulateur (3, 3^{I}, 3^{II}, 3^{III}, 3^{IV}) déterminé et responsable pour ses valeurs de mesure.

8. Système de mesure (6) distribué selon l'une des revendications précédentes,
**caractérisé en ce que**
un algorithme de sécante est mis en œuvre dans le capteur de mesure (7, 7^{I}, 7^{II}, 7^{III}, 7^{IV}),
dans lequel le capteur de mesure (7, 7^{I}, 7^{II}, 7^{III}, 7^{IV}) présente une commande fonctionnant en autarcie pour la transmission de ses données mesurées qui sont dérivées de plusieurs mesures individuelles,
et le capteur de mesure (7, 7^{I}, 7^{II}, 7^{III}, 7^{IV}) est aménagé en tant que capteur de courant pour une ligne de batteries complète ou
en tant que capteur de température pour une température ambiante à l'extérieur d'une armoire de batteries ou pour une température (T) de l'accumulateur (3, 3^{I}, 3^{II}, 3^{III}, 3^{IV}) attribué au capteur de mesure (7, 7^{I}, 7^{II}, 7^{III}, 7^{IV}).

9. Système de mesure (6) distribué selon l'une des revendications 2 à 8,
**caractérisé en ce que**
le collecteur de données mesurées (4) est conçu pour une transformation d'une courbe de mesure (U, T) réelle, qui comprend deux paramètres (U, T) modifiables sur un temps (t), en une courbe (T_{abg.}) approchée et dérivée, après la transmission (40) de ladite courbe de mesure via au moins l'un des canaux de communication (28, 30, 32) vers le collecteur de données mesurées (4).

10. Système de mesure (6) distribué selon l'une des revendications précédentes,
**caractérisé en ce que**
des mêmes données peuvent être transmises via le bus de données relié par câble et via les conduits d'alimentation en énergie (15, 15^{I}), respectivement dans un autre protocole électrique.

11. Commande de mesure pour la transmission d'au moins deux valeurs de détection,
pour l'utilisation dans un système de mesure (6) distribué selon l'une des revendications précédentes et
dans laquelle la commande de mesure comprend au moins un capteur de mesure (7, 7^{I}, 7^{II}, 7^{III}, 7^{IV}), qui présente une commande fonctionnant en autarcie pour la transmission des valeurs de capteur,
et un bus de données relié par câble existe entre le au moins un capteur de mesure (7, 7^{I}, 7^{II}, 7^{III}, 7^{IV}) et un collecteur de données mesurées (4),
dans laquelle les valeurs de capteur représentent des paramètres (U, T) physiques différents d'un accumulateur (3, 3^{I}, 3^{II}, 3^{III}, 3^{IV}) comprenant plusieurs cellules à un premier instant et à un deuxième instant,
pendant que dans le même temps sont transmis des paramètres physiques d'un deuxième accumulateur (3, 3^{I}, 3^{II}, 3^{III}, 3^{IV}),
dans laquelle tous ces paramètres sont retransmis au collecteur de données mesurées (4) raccordé via un câble d'alimentation en énergie,
**caractérisée en ce que**
les paramètres (U, T) sont transmis en tant que partie d'un tracé polygonal,
qui est un tracé polygonal à approcher par des sécantes,
via le bus de données, depuis le au moins un des capteurs de mesure (7, 7^{I}, 7^{II}, 7^{III}, 7^{IV}) vers le collecteur de données mesurées (4).

12. Commande de mesure selon la revendication 11,
**caractérisée en ce que**
des sécantes (S₁, S₂, S^{I}₁, S^{I}₂, S^{I}₃, S^{II}₁) attribuées à un paramètre (U, T) qui sont approchées à partir de courbes de mesure, à l'aide d'un algorithme de sécante qui est exécuté dans les capteurs de mesure (7, 7^{I}, 7^{II}, 7^{III}, 7^{IV}), produisent un tracé polygonal,
qui restitue une évolution dans le temps d'au moins l'un des paramètres (U, T) sous une forme approchante,
dans laquelle au moins deux paramètres (U, T) différents sont établis par des sécantes (S₁, S₂, S^{I}₁, S^{I}₂, S^{I}₃, S^{II}₁) sur la base d'un ensemble de points d'appui (i, t₁^{I}, ^{t}2^{I}, ^{t}3^{I}, ^{t}4^{I}, ^{t}5^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}).

13. Commande de mesure selon l'une des revendications précédentes 11 ou 12,
**caractérisée en ce que**
la transmission au collecteur de données mesurées (4) comprend deux types différents d'ensembles de données mesurées.

14. Commande de mesure selon l'une des revendications précédentes 11 à 13,
**caractérisée en ce que**
chaque sécante (S₁, S₂, S^{I}₁, S^{I}₂, S^{I}₃, S^{II}₁)
demeure inférieure à une longueur maximale
grâce à une fréquence minimale d'une survenue d'instants (t₀, t₁, t₂, t₃, t₄, t₅, t₆, t₇, t₁^{I}, t₂^{I}, t₃^{I}, t₄^{I}, t₅^{I}, t₆^{I}, t₇^{I}, t₈^{I}, t₉^{I}, t₁^{II}, t₂^{II}, t₃^{II}, t₄^{II}, t₁^{III}, t₂^{III}, t₃^{III}, t₄^{III}) pour lesquels un vertex détermine respectivement un début et/ou une fin d'une sécante (S₁, S₂, S^{I}₁, S^{I}₂, S^{I}₃, S^{II}₁),
et/ou
grâce à un respect d'une erreur absolue maximale (F_{M}) en raison d'une restitution de la trajectoire par une sécante (S₁, S₂, S^{I}₁, S^{I}₂, S^{I}₃, S^{II}₁) au lieu d'une courbe de paramètres,
dans laquelle l'erreur est ajustée par des paramètres mesurés d'une mesure à la suivante.

15. Procédé de transmission de données mesurées,
qui peut être exécuté sur un système de mesure (6) électronique distribué, en particulier sur un système de mesure (6) selon l'une des revendications 1 à 10,
dans lequel des capteurs de mesure (7, 7^{I}, 7^{II}, 7^{III}, 7^{IV}) individuels sont respectivement assignés à des transformateurs électrochimiques,
dans lequel une partie d'une commande de mesure, en particulier d'une commande de mesure selon l'une des revendications 11 à 14, assure une mesure de paramètres (U, T) du transformateur électrochimique,
dans lequel des paramètres (U, T) détectés en tant que valeurs de mesure par l'un des capteurs de mesure (7, 7^{I}, 7^{II}, 7^{III}, 7^{IV}) sont transmis via plusieurs canaux de communication depuis le capteur de mesure (7, 7^{I}, 7^{II}, 7^{III}, 7^{IV}) vers le collecteur de données mesurées (4) agencé à distance,
dans lequel entre les capteurs de mesure (7, 7^{I}, 7^{II}, 7^{III}, 7^{IV}) et le collecteur de données mesurées (4) existe un bus de communication relié par câble, lequel bus forme l'un des canaux de communication (28, 30, 32),
**caractérisé en ce que**
au moins deux ensembles de données mesurées différents, un premier ensemble de données mesurées et un second ensemble de données mesurées, sont transmis à des instants différents via le bus de communication relié par câble, par l'un des capteurs de mesure (7, 7^{I}, 7^{II}, 7^{III}, 7^{IV},
dans lesquels un point mesuré (M₁^{I}) est saisi en tant que valeur pour une valeur de sécante (T₁^{I}) avec des longueurs temporelles différant les unes des autres d'un ensemble de données mesurées à l'autre.
